# EUROPÄISCHE PATENTSCHRIFT

(11) **EP 2 962 255 B1**
(45) Veröffentlichungstag und Bekanntmachung des Hinweises auf die Patenterteilung: **11.12.2019**
(21) Anmeldenummer: 14711697.4
(22) Anmeldetag: 27.02.2014
(51) Int. Cl.: G06K 19/077, G06K 19/073

(54) **CHIPKARTE MIT INTEGRIERTEN AKTIVEN KOMPONENTEN**
CHIP CARD WITH INTEGRATED ACTIVE COMPONENTS
CARTE À PUCE À COMPOSANTS ACTIFS INTÉGRÉS

(30) Priorität: 28.02.2013 DE 102013102003
(43) Veröffentlichungstag der Anmeldung: 06.01.2016
(73) Patentinhaber: Infineon Technologies AG, 85579 Neubiberg (DE); Bundesdruckerei GmbH, 10969 Berlin (DE)
(72) Erfinder: FISCHER, Joerg, 13053 Berlin (DE); HOEGERL, Juergen, 93053 Regensburg (DE); PUESCHNER, Frank, 93309 Kelheim (DE); STAMPKA, Peter, 93133 Burglengenfeld (DE); TIETKE, Markus, 12169 Berlin (DE); TROELENBERG, Stefan, 15749 Mittenwalde (DE)
(74) Vertreter: Viering, Jentschura & Partner mbB Patent- und Rechtsanwälte
(86) Internationale Anmeldenummer: PCT/EP2014/053825
(87) Internationale Veröffentlichungsnummer: WO 2014/131830

(56) Entgegenhaltungen:
- EP-A1- 2 131 312
- WO-A1-2006/100206
- WO-A2-2004/082032
- DE-A1- 10 252 357

## Beschreibung

Mit zunehmender Verbreitung von elektronischen (Ausweis-) Dokumenten, wie etwa dem elektronischen Personalausweis, welcher als Chipkarte das einfache, bisher verwendete Papierdokument ersetzt, rückt deren Manipulationssicherheit zunehmend in den Fokus. Nicht nur bei elektronischen Identitätsnachweisen sondern beispielsweise auch bei chipkartenbasierten Bezahlsystemen spielt die Sicherheit eine große Rolle.

Um die Manipulationssicherheit von elektronischen Dokumenten zu erhöhen, können auf Dokumentebene übliche Maßnahmen getroffen werden, wie etwa das Vorsehen zusätzlicher Sicherheitslagen, welche den Zugriff von außen erschweren sollen. Auf Halbleiterebene können zusätzlich sichere Chips verwendet werden und auch die darauf laufende Software kann unter dem Gesichtspunkt der Sicherheit ausgelegt werden.

Weiterhin können benutzerunterstützte Sicherheitsmerkmale auf Chipkarten verwendet werden, wobei hier eine Chipkarten als beispielhafte Verkörperung eines elektronischen Dokuments und/oder eines Identitätsnachweises betrachtet werden kann. So können Chipkarten alphanumerische Anzeigen aufweisen, die im Zusammenspiel mit dem in der Chipkarte integrierten Chip Zeichenfolgen darstellen können, die letztendlich zur Autorisierung von Aktivitäten wie Zugängen zu Gebäuden oder Geldzahlungen verwendet werden können. In einem konkreten Beispiel könnte eine Zufallsgeheimzahl auf einer Anzeige der Chipkarte angezeigt werden, welche der Benutzer der Chipkarte verwenden kann, um sich bei einem Vorgang, beispielsweise dem Geldabheben an einem Bankautomaten, als Berechtigter auszuweisen. Die nötige Energie für den Betrieb der Anzeige sowie weiterer elektronischer Komponenten innerhalb der Chipkarte kann dabei aus einem Kommunikationsfeld in Form eines Magnetfeldes des Bankautomaten als Lesegerät bezogen werden.

Derzeit sind nur Konstruktionen bekannt, bei denen der Chip und das Anzeigeelement (beispielsweise ein LCD-Display) separate Komponenten darstellen, sowie Chips, welche integrierte LED Elemente aufweisen. Das damit einhergehende Verbindungssystem zwischen dem in der Chipkarte verbautem Chip und der Anzeigeelement stellt jedoch einen potentiellen Angriffspunkt für Manipulationen dar. So könnte ein potentieller Angreifer etwa in den Signalpfad eingreifen, um eine Falschdarstellung am Anzeigeelement zu erzwingen und dabei die authentischen Identifizierungszeichen abzufangen. Zudem verursacht das erforderliche Verbindungssystem einen erhöhten Montageaufwand auf Chipkartenebene und birgt das Risiko von Ausfällen des Gesamtsystems, etwa aufgrund von kabel- oder leitungsbruchbedingten Unterbrechungen am Verbindungssystem.

In der Patentanmeldung DE 10 2008 041 306 A1 wird eine Chipkarte mit einer integrierten Schaltung und einem über der integrierten Schaltung angeordneten Konversionsbereich beschrieben. Die integrierte Schaltung weist Sendemittel zur Sendung einer Strahlung zu dem Konversionsbereich und Empfangsmittel zum Empfang der konvertierten Strahlung vom Konversionsbereich auf. Diese Chipkarte ist eine RFID-Chipkarte.

Die Patentanmeldung DE 10 2010 020 460 A1 beschreibt ein Wertdokument in Form einer Chipkarte mit einem integrierten RFID-Schaltkreis, welcher Sensorelemente und ein Licht emittierendes Element aufweist. Der integrierte RFID-Schaltkreis ist jedoch zur Kommunikation mit der Außenwelt mittels galvanischer und damit verschleißanfälliger Schnittstellen an eine innerhalb der Chipkarte angeordnete Antenne gekoppelt.

Die Druckschrift WO2006/100206A1 beschreibt ein elektronisches Modul, welches einen Träger, einen Chip und eine mit dem Chip mittels Leitern verbundene Leuchtdiode aufweist.

Die Druckschrift DE10252357A1 beschreibt ein Chipmodul für eine Chipkarte, wobei der Chip eine Fläche aufweist, welche transparent für optische Signale ist.

Die Druckschrift EP2131312A1 beschreibt einen Chip mit einer ringförmigen Unterstützungsstruktur.

Die Druckschrift WO2004/082032A2 beschreibt eine Lichtquelle. Die Lichtquelle besteht aus einer LED und einem Leuchtstoff, wobei der Leuchtstoff das emittierte Licht der LED modifizieren kann.

Die Erfindung bezieht sich auf ein Chipkartenmodul nach Anspruch 1 und ein Herstellungsverfahren nach Anspruch 8. Vorteilhafte Ausführungsbeispiele sind Gegenstand der abhängigen Ansprüche.

Bei dem Chipkartenmodul kann es sich um einen wesentlichen Bestandteil von Chipkarten (auch Smartcards genannt) handeln, wobei Chipkaten-Standards beispielsweise durch die ISO/IEC 7810 Norm und der ISO/IEC 7816 Norm festlegt sind. Des Weiteren kann es sich bei der Chipkarte um eine kontaktlose Chipkarte nach der ISO/IEC 14443 Norm handeln. Der Austausch von Daten zwischen der Chipkarte und einer Leseeinheit kann beispielsweise gemäß dem NFC-Übertragungsstandard (NFC: near field communication - Nahfeldkommunikation) bei einer Frequenz von 13,56 MHz erfolgen.

Das Chipkartenmodul gemäß verschiedenen Ausführungsbeispielen kann in einer Chipkarte eingebettet vorliegen und/oder es kann Teil eines Wert- und/oder Sicherheitsdokuments sein. Unter einem Wert- und/oder Sicherheitsdokument kann beispielsweise ein Personalausweis, ein Reisepass, ein Führerschein, eine Bankkarte, eine Kreditkarte, ein Zugangsausweis, ein Mitgliedsausweis, ein Authentisierungstoken, ein Fahrzeugschein, ein Fahrzeugbrief, eine Aktie, eine Banknote, ein Scheck, eine Briefmarke, Steuerzeichen usw. gemeint sein. Das Chipkartenmodul als solches kann in einer Chipkarte eingebettet sein oder auch einen Teil eines Wert- und/oder Sicherheitsdokuments sein, beispielsweise eine Seite in einem Reisepass.

Ein in einer Chipkarte eingebettetes Chipkartenmodul kann einen Chip aufweisen, also einen integrierten Schaltkreis, welcher Logik- sowie Speicherschaltkreise (oder -blöcke) enthalten kann und so den Funktionsumfang der Chipkarte bestimmt. Die Verdrahtungsstruktur stellt dabei die elektrische Verbindungsinfrastruktur dar für die Komponenten/Bauteile, welche sich auf dem Chipkartenmodul befinden (wie etwa Spulen oder Kondensatoren). Im Allgemeinen kann eine Chipkarte kontaktbasiert oder kontaktlos mit Lesegeräten kommunizieren oder aber auch als Dual-Interface (Doppelschnittstelle) Chipkarte eingerichtet sein, also sowohl Mittel zur kontaktbasierten als auch zur kontaktlosen Kommunikation aufweisen. Ein Chipkartenmodul einer üblichen kontaktbasierten Chipkarte weist ein Kontaktfeld auf, welches an der Oberfläche der Chipkarte freiliegt und von Kontakten einer Lesevorrichtung kontaktiert werden kann. Ein Chipkartenmodul einer kontaktlosen Chipkarte kann eine Chipkartenmodulantenne aufweisen, beispielsweise eine Spule in Form von Leiterbahnwindungen. Die gemeinsame Anordnung der Spule und des Chips auf einem Chipkartenmodul wird auch als CoM (Coil on Module - Spule auf Modul) bezeichnet. Um eine drahtlose Kommunikation über größere Distanzen zu ermöglichen, welche auf Grund der relativ geringen Größe der Chipkartenmodulantenne schwer realisierbar ist, kann in der Chipkarte eine Chipkartenantenne bereitgestellt werden, an welche die Chipkartenmodulantenne induktiv koppeln kann. Alternativ kann auch die Chipkartenmodulantenne weggelassen werden und das Chipkartenmodul kann galvanisch mit der Chipkartenantenne gekoppelt werden. Bei der Chipkartenantenne handelt es sich üblicherweise um eine großformatige Antenne in Form von Leiterbahnwindungen, welche in einer weiteren Schicht der Chipkarte bereitgestellt werden kann und sich prinzipiell innerhalb dieser Schicht (oder an einer Oberfläche dieser Schicht) auf den gesamten Bereich der Chipkarte erstrecken kann, was beispielsweise bei Chipkarten im ID-1 Format gemäß der ISO/IEC 7810 Norm üblicherweise der Fall sein kann. Die Chipkartenantenne kann sich jedoch auch nur über einen Teilbereich der Chipkarte erstrecken, beispielsweise etwa über die Hälfte einer Chipkarte, wie es bei Chipkarten im ID-3 Format gemäß der ISO/IEC 7810 üblicherweise der Fall ist, so dass die Chipkartenantenne dann eine vergleichbare Größe aufweist wie im Falle einer Chipkarte im ID-1 Format. Die Chipkartenantenne stellt dann die externe drahtlose (d.h. kontaktlose) Kommunikationsschnittstelle zu einem Lesegerät bereit. Bei der Verwendung der Chipkartenantenne im Zusammenspiel mit einer auf dem Chipkartenmodul angeordneten Chipkartenmodulantenne wird die Chipkartenantenne als eine Booster-Antenne (Verstärker-Antenne) bezeichnet. Eine Dual-Interface Chipkarte kann dann als eine Vereinigung einer kontaktbasierten und einer kontaktlosen Chipkarte verstanden werden und weist entsprechend beide Kommunikationsschnittstellen auf.

Auf dem hier beschriebenen Chipkartenmodul gemäß verschiedenen Ausführungsbeispielen (beispielsweise auf dem Chipkartenmodulträger oder der Chipkartenmodulträgerschicht, auf welcher die Verdrahtungsstruktur aufgebracht ist) ist zudem eine Leuchtvorrichtung angeordnet, welche beispielsweise als Anzeige fungieren kann. Die Leuchtvorrichtung ist damit keine gesonderte Komponente, welche beispielsweise mit dem Chip oder einer gesonderten Ansteuerungseinheit auf dem Chipkartenmodul verbunden werden müsste, sondern sie ist ein Bestandteil des Chipkartenmoduls. Anders ausgedrückt können bei dem Chipkartenmodul gemäß verschiedenen Ausführungsbeispielen der Chip, die Verdrahtungsstruktur (verbindende Leiterbahnenstruktur), sowie die Leuchtvorrichtung alle gemeinsam in/auf einem Chipkartenmodul, welches zudem noch laminiert oder versiegelt sein kann und somit eine materialschlüssig verkapselte Einheit darstellen kann, integriert sein.

Durch diese gemeinsame Integration kann die Manipulationssicherheit der Leuchtvorrichtung erhöht werden, indem der Zugriff auf die Verdrahtungsstruktur und damit die elektrische Verbindung zwischen der Leuchtvorrichtung und dem Chip erheblich erschwert wird, da das Chipkartenmodul üblicherweise in dem Chipkartenkörper einlaminiert ist und/oder von weiteren Schichten der Chipkarte bedeckt ist. Zusätzlich kann der Montageaufwand auf Chipkartenebene minimiert werden, da nunmehr nur noch eine Komponente - eben das Chipkartenmodul gemäß verschiedenen Ausführungsbeispielen - verbaut werden muss. Im Falle einer kontaktlosen Kopplung mit der Chipkartenantenne mittels der auf dem Chipkartenmodul angeordneten Chipkartenmodulantenne, etwa einer Spule, kann so ein zuverlässiges und robustes, in sich verkapseltes Chipkartenmodul bereitgestellt werden.

Gemäß weiteren Ausführungsbeispielen des Chipkartenmoduls kann der Chipkartenmodulträger ein nicht leitfähiges Trägersubstrat aufweisen.

Gemäß weiteren Ausführungsbeispielen des Chipkartenmoduls kann die Verdrahtungsstruktur auf einer Seite des Chipkartenmodulträgers ausgebildet sein.

Gemäß weiteren Ausführungsbeispielen des Chipkartenmoduls kann die Verdrahtungsstruktur auf beiden Seiten des Chipkartenmodulträgers ausgebildet sein.

Gemäß weiteren Ausführungsbeispielen des Chipkartenmoduls kann der integrierte Schaltkreis eingerichtet sein, die Leuchtvorrichtung anzusteuern.

Gemäß weiteren Ausführungsbeispielen des Chipkartenmoduls kann die Leuchtvorrichtung mehrere diskrete Leuchtmittel aufweisen.

Gemäß weiteren Ausführungsbeispielen des Chipkartenmoduls kann der integrierte Schaltkreis eingerichtet sein, die mehreren diskreten Leuchtmittel in einem Multiplexverfahren anzusteuern.

Gemäß weiteren Ausführungsbeispielen des Chipkartenmoduls kann die Leuchtvorrichtung als ein tastempfindliches Eingabemittel eingerichtet sein. Die Tastempfindlichkeit kann beispielsweise auf einer Variation eines Entladeverhaltens der diskreten Leuchtmittel der Leuchtvorrichtung basieren, welches sich ändern kann, wenn ein Nutzer seinen Finger in unmittelbare Nähe der Leuchtmittel, beispielsweise an die Oberfläche der Chipkarte, heranführt. In einem solchen Fall kann sich bei Verwendung von LEDs als Leuchtmittel deren Eigenkapazität ändern und damit das Entladeverhalten beeinflussen.

Gemäß weiteren Ausführungsbeispielen des Chipkartenmoduls kann mindestens eines der mehreren diskreten Leuchtmittel als LED-Chip eingerichtet sein.

Gemäß weiteren Ausführungsbeispielen des Chipkartenmoduls kann mindestens eines der mehreren diskreten Leuchtmittel als ein in einem Gehäuse verkapselter LED-Chip eingerichtet sein.

Gemäß weiteren Ausführungsbeispielen des Chipkartenmoduls kann mindestens eines der mehreren diskreten Leuchtmittel als organische LED eingerichtet sein.

Gemäß weiteren Ausführungsbeispielen des Chipkartenmoduls können die Verdrahtungsstruktur und die Leuchtvorrichtung integral mit dem Chipkartenmodulträger ausgebildet sein.

Gemäß weiteren Ausführungsbeispielen des Chipkartenmoduls können die Leuchtvorrichtung und der integrierte Schaltkreis auf derselben Seite des Chipkartenmodulträgers angeordnet sein.

Gemäß weiteren Ausführungsbeispielen des Chipkartenmoduls können die Leuchtvorrichtung und der integrierte Schaltkreis auf unterschiedlichen Seiten des Chipkartenmodulträgers angeordnet sein.

Gemäß weiteren Ausführungsbeispielen des Chipkartenmoduls kann die Leuchtvorrichtung zur Abgabe eines nicht kognitiv erfassbaren Signals ausgebildet sein. Das nicht kognitiv erfassbare Signal kann beispielsweise mittels einer frequenzmodulierten, amplitudenmodulierten oder phasenmodulierten Lichtabstrahlung erfolgen. Dabei kann die Modulation der Lichtabgabe so ausgestaltet sein, dass sie nur maschinell, beispielsweise von einer entsprechend eingerichteten Leseeinrichtung erfasst und ausgewertet werden kann, nicht jedoch von dem Benutzer mit bloßem Auge wahrnehmbar ist. Ebenfalls können kognitiv erfassbare und kognitiv nicht erfassbare Informationen in einem Multiplexverfahren übertragen werden, wobei die Zeitintervalle, in denen die Lichtabstrahlung der Leuchtvorrichtung moduliert wird, mit Zeitintervallen, in denen die Lichtabstrahlung der Leuchtvorrichtung nicht moduliert wird, für den Nutzer optisch verschwimmen, so dass er mit bloßem Auge keine Schwankung der ihm von dem Chipkartenmodul gemäß verschiedenen Ausführungsbeispiele (oder entsprechend der dazugehörigen Chipkarte) präsentierten Bildinformation wahrnimmt. Die Modulation der Lichtabstrahlung der Leuchtvorrichtung kann nicht nur temporal, sondern auch räumlich erfolgen, so dass etwa ein Teilbereich der Leuchtvorrichtung nicht kognitiv erfassbare Daten aussendet, während ein anderer Teilbereich der Leuchtvorrichtung kognitiv erfassbare Daten aussendet. Die räumliche Modulation kann auch derart erfolgen, dass die Leuchtvorrichtung zweidimensionale Muster als Segment-Barcode darstellt. Die räumliche Modulation der Lichtabstrahlung kann selbstverständlich auch mit der temporalen Modulation der Lichtabstrahlung kombiniert werden.

Gemäß weiteren Ausführungsbeispielen des Chipkartenmoduls kann der Chipkartenmodulträger ferner einen verstärkten Bereich aufweisen, in welchem der integrierte Schaltkreis angeordnet ist.

Gemäß weiteren Ausführungsbeispielen des Chipkartenmoduls kann der verstärkte Bereich eine Materialschicht aufweisen, welche einen höheren Steifigkeitswert aufweist als der Chipkartenmodulträger.

Gemäß weiteren Ausführungsbeispielen des Chipkartenmoduls kann die Materialschicht auf dem Chipkartenmodulträger zwischen dem integrierten Schaltkreis und dem Chipkartenmodulträger angeordnet sein.

Gemäß weiteren Ausführungsbeispielen des Chipkartenmoduls kann die Materialschicht unter dem integrierten Schaltkreis auf der dem integrierten Schaltkreis gegenüberliegenden Seite des Chipkartenmodulträgers angeordnet sein.

Gemäß weiteren Ausführungsbeispielen kann das Chipkartenmodul eine Spule aufweisen, welche auf dem Chipkartenmodulträger angeordnet ist und mit der Verdrahtungsstruktur elektrisch gekoppelt ist.

Gemäß weiteren Ausführungsbeispielen des Chipkartenmoduls können die Spule und die Leuchtvorrichtung auf unterschiedlichen Seiten des Chipkartenmodulträgers ausgebildet sein.

Gemäß weiteren Ausführungsbeispielen kann das Chipkartenmodul ferner einen Ring enthalten, welcher entlang des Randbereiches des Chipkartenmodulträgers verlaufend auf diesem angeordnet ist.

Gemäß weiteren Ausführungsbeispielen des Chipkartenmoduls kann über einer Oberfläche des Chipkartenmodulträgers, auf welcher die Leuchtvorrichtung angeordnet ist, eine transparente Abdeckschicht angeordnet sein.

Gemäß weiteren Ausführungsbeispielen des Chipkartenmoduls kann ein Bereich über dem Chipkartenmodulträger, welcher seitlich von dem Ring begrenzt ist, mit einem Abdeckmaterial gefüllt sein.

Gemäß weiteren Ausführungsbeispielen des Chipkartenmoduls kann die transparente Abdeckschicht in Form einer Kappe aus einem Vergussmaterial bereitgestellt sein.

Gemäß weiteren Ausführungsbeispielen des Chipkartenmoduls kann der Ring an einem Umfangsrand der Abdeckschicht anliegen.

Gemäß weiteren Ausführungsbeispielen des Chipkartenmoduls kann das Abdeckmaterial für das von der Leuchtvorrichtung erzeugte Licht transparent sein.

Gemäß weiteren Ausführungsbeispielen des Chipkartenmoduls kann das Abdeckmaterial aus einer Vergussmasse gebildet sein.

Gemäß weiteren Ausführungsbeispielen des Chipkartenmoduls kann die Leuchtvorrichtung unmittelbar mit der Chipkartenmodul-Antenne elektrisch gekoppelt sein, ohne mit dem integrierten Schaltkreis steuerbar gekoppelt zu sein. Dieses kann auch nur für einen Teil der Leuchtvorrichtung, beispielsweise für einen Teil der diskreten Leuchtmittel der Leuchtvorrichtung, gelten.

In verschiedenen Ausführungsbeispielen wird ein Verfahren zum Herstellen eines Chipkartenmoduls bereitgestellt, wobei das Verfahren aufweisen kann: Bereitstellen eines Chipkartenmodulträgers; Ausbilden einer Verdrahtungsstruktur auf dem Chipkartenmodulträger; Ausbilden eines integrierten Schaltkreises auf dem Chipkartenmodulträger, so dass der integrierte Schaltkreis mit der Verdrahtungsstruktur elektrisch gekoppelt ist; Ausbilden einer Chipkartenmodul-Antenne auf dem Chipkartenmodulträger, so dass die Chipkartenmodul-Antenne mit der Verdrahtungsstruktur elektrisch gekoppelt ist; Ausbilden einer Leuchtvorrichtung auf dem Chipkartenmodulträger, so dass die Leuchtvorrichtung mit der Verdrahtungsstruktur elektrisch gekoppelt ist; gekennzeichnet durch das Ausbilden eines Verkapselungsmaterial auf oder über dem Chipkartenmodul, wobei das Verkapselungsmaterial ein Sicherheitsmaterial aufweist, das die Eigenschaften des von der Leuchtvorrichtung abgegebenen Lichtes, insbesondere dessen Spektrum, Ansprechzeit und/oder Abklingverhalten, in einer Weise ändert, dass die Echtheit der Chipkarte und/oder der Leuchtvorrichtung verifizierbar sind/ist.

Gemäß weiteren Ausführungsbeispielen des Verfahrens kann der Chipkartenmodulträger aus einem nicht leitfähigen Trägersubstrat gebildet sein.

Gemäß weiteren Ausführungsbeispielen des Verfahrens kann die Verdrahtungsstruktur auf einer Seite des Chipkartenmodulträgers ausgebildet sein.

Gemäß weiteren Ausführungsbeispielen des Verfahrens kann die Verdrahtungsstruktur auf beiden Seiten des Chipkartenmodulträgers ausgebildet sein.

Gemäß weiteren Ausführungsbeispielen des Verfahrens kann das Ausbilden der Leuchtvorrichtung ein Ausbilden mehrerer diskreter Leuchtmittel aufweisen.

Gemäß weiteren Ausführungsbeispielen des Verfahrens kann mindestens eines der mehreren diskreten Leuchtmittel als LED-Chip ausgebildet werden.

Gemäß weiteren Ausführungsbeispielen des Verfahrens kann mindestens eines der mehreren diskreten Leuchtmittel als ein in einem Gehäuse verkapselter LED-Chip ausgebildet sein.

Gemäß weiteren Ausführungsbeispielen des Verfahrens kann mindestens eines der mehreren diskreten Leuchtmittel als organische LED ausgebildet werden.

Gemäß weiteren Ausführungsbeispielen des Verfahrens können die Verdrahtungsstruktur und die Leuchtvorrichtung integral mit dem Chipkartenmodulträger ausgebildet werden.

Gemäß weiteren Ausführungsbeispielen des Verfahrens können die Leuchtvorrichtung und der integrierte Schaltkreis auf derselben Seite des Chipkartenmodulträgers ausgebildet werden.

Gemäß weiteren Ausführungsbeispielen des Verfahrens können die Leuchtvorrichtung und der integrierte Schaltkreis auf unterschiedlichen Seiten des Chipkartenmodulträgers ausgebildet werden.

Gemäß weiteren Ausführungsbeispielen kann das Verfahren ferner Ausbilden eines verstärkten Bereiches auf dem Chipkartenmodulträger aufweisen, in welchem der integrierte Schaltkreis angeordnet wird.

Gemäß weiteren Ausführungsbeispielen des Verfahrens kann der verstärkte Bereich aus einem Material, beispielsweise einer Materialschicht, gebildet werden, welches eine höhere Steifigkeit aufweist als der Chipkartenmodulträger.

Gemäß weiteren Ausführungsbeispielen des Verfahrens kann die Materialschicht auf dem Chipkartenmodulträger zwischen dem integrierten Schaltkreis und dem Chipkartenmodulträger ausgebildet werden.

Gemäß weiteren Ausführungsbeispielen des Verfahrens kann die Materialschicht unter dem integrierten Schaltkreis auf der dem integrierten Schaltkreis gegenüberliegenden Seite des Chipkartenmodulträgers ausgebildet werden.

Gemäß weiteren Ausführungsbeispielen kann das Verfahren ferner Ausbilden einer Spule auf dem Chipkartenmodulträger aufweisen, welche mit der Verdrahtungsstruktur elektrisch gekoppelt ist.

Gemäß weiteren Ausführungsbeispielen des Verfahrens kann die Spule auf der der Leuchtvorrichtung gegenüberliegenden Seite des Chipkartenmodulträgers ausgebildet werden.

Gemäß weiteren Ausführungsbeispielen kann das Verfahren ferner Ausbilden eines Ringes auf dem Chipkartenmodulträger aufweisen, welcher entlang des Randbereiches des Chipkartenmodulträgers auf dem Chipkartenmodulträger angeordnet ist.

Gemäß weiteren Ausführungsbeispielen kann das Verfahren ferner Auffüllen eines Bereiches über dem Chipkartenmodulträger, welcher seitlich von dem Ring begrenzt ist, mit einem Abdeckmaterial aufweisen.

Gemäß weiteren Ausführungsbeispielen des Verfahrens kann das Abdeckmaterial für das von der Leuchtvorrichtung erzeugte Licht transparent sein.

Gemäß weiteren Ausführungsbeispielen des Verfahrens kann das Abdeckmaterial aus einer Vergussmasse gebildet werden.

In verschiedenen Ausführungsbeispielen wird eine Chipkarte bereitgestellt, welche das Chipkartenmodul gemäß verschiedenen Ausführungsbeispielen aufweisen kann, wobei das Chipkartenmodul vollständig von einem Chipkartenmaterial umgeben ist.

Bei der Chipkarte gemäß verschiedenen Ausführungsbeispielen kann es sich um eine Dual-Interface Chipkarte oder eine kontaktlose Chipkarte handeln. Bei einer Ausbildung als eine kontaktlose Chipkarte kann auf Kontaktstellen (Kontaktierungen) innerhalb der Chipkarte mit Ausnahme des Moduls verzichtet werden. Ist zusätzlich zu dem Chipkartenmodul eine Booster-Antenne in der Chipkarte bereitgestellt, so gibt es keine weiteren Kontaktstellen und die Chipkarte gemäß verschiedenen Ausführungsbeispielen kann so eine besonders hohe Stabilität aufweisen.

Ferner kann bei der Chipkarte gemäß verschiedenen Ausführungsbeispielen auf einen Treiberschaltkreis für die Leuchtvorrichtung, beispielsweise einen Treiberchip, verzichtet werden, da die Leuchtvorrichtung direkt vom Chip des Chipkartenmoduls gemäß verschiedenen Ausführungsbeispielen angesteuert werden kann. Durch den Verzicht auf den Treiberchip kann so eine potentielle Angriffsmöglichkeit auf den Chip des Chipkartenmoduls reduziert werden. Die direkte Ansteuerung der Leuchtvorrichtung (beispielsweise LEDs oder OLEDs) kann zur Erhöhung der Gesamtsicherheit auch des Chips selber und damit der im Chip gespeicherten Daten beitragen.

Gemäß weiteren Ausführungsbeispielen der Chipkarte kann das Chipkartenmodul in einer Vertiefung innerhalb einer Chipkartenschicht angeordnet sein.

Gemäß weiteren Ausführungsbeispielen der Chipkarte kann das Chipkartenmaterial von weiteren Chipkartenschichten gebildet werden.

Gemäß weiteren Ausführungsbeispielen der Chipkarte kann die Chipkartenschicht zwischen zwei von den weiteren Chipkartenschichten angeordnet sein.

Gemäß weiteren Ausführungsbeispielen der Chipkarte kann die von der Oberfläche des Abdeckmaterials des Chipkartenmoduls gebildete obere Fläche bündig mit der oberen Fläche der Chipkartenschicht abschließen, in welcher das Chipkartenmodul angeordnet ist.

Gemäß weiteren Ausführungsbeispielen der Chipkarte kann das Chipkartenmaterial mindestens in einem Volumen über der Leuchtvorrichtung für das von der Leuchtvorrichtung emittierte Licht transparent sein.

Gemäß weiteren Ausführungsbeispielen der Chipkarte kann die Leuchtvorrichtung als eine Anzeige zum Darstellen alphanumerischer Zeichen eingerichtet sein.

Die Chipkarte kann ferner einen Diffusor aufweisen, also beispielsweise ein diffus streuendes Mittel, wie etwa eine Diffusorfolie. Der Diffusor kann in einer Schicht angeordnet sein, die beispielsweise auf einem Displaymodul und/oder einer Ausgleichsfolie angeordnet sein kann. Als Diffusor können beispielsweise opake Folien mit einer Dicke von 50 bis 200 µm, bevorzugt mit einer Dicke von 100 µm eingesetzt werden. Der Diffusor bewirkt, dass aus einer insbesondere punktförmigen Lichtquelle mit einer sehr engen Abstrahlcharakteristik Licht durch Streuung in einem größeren Raumwinkel abgegeben wird. Streuung wird beispielsweise durch Partikel erreicht, welche einen Durchmesser aufweisen, welcher größer als die halbe Wellenlänge des Lichts ist, also für sichtbares Licht beispielsweise Partikel, welche größer sind als 200 nm. Bevorzugt für diese Partikel sind beispielhaft TiO₂, SiO₂ und ZnO. In einer weiteren Ausführungsform werden die den Diffusor bildenden Partikel in Form einer Druckfarbe auf eine Folie aufgetragen, wobei hierzu die Druckverfahren des Hoch-, Flach-, Tief-, Durch- oder Digitaldrucks, besonders bevorzugt Offset-, Sieb- oder Tintenstrahldruck, verwendet werden können. Beispielsweise ist über dem Diffusor eine Maske angeordnet. Beispielsweise hat die Maske eine rechteckige Form. Auf diese Weise kann aus einer sehr kleinen LED ein balkenförmig wirkende Lichtquelle erzeugt werden, wie diese für eine Segmentanzeige benötigt wird. Die Maske besteht aus Licht absorbierendem Material, zum Beispiel einer Ruß enthaltenden Druckfarbe. Hierdurch wird die kognitive Wahrnehmbarkeit deutlich gesteigert und so die Integration sehr kleiner Leuchtmittel in sehr kompakter Bauweise ermöglicht.

Ferner kann, beispielsweise auf oder über einem Displaymodul ein Verkapselungsmaterial aufgebracht sein, welches optional die freien Bereiche zwischen dem Chip und der Leuchtvorrichtung ausfüllt. Das Verkapselungsmaterial weist mindestens ein Sicherheitsmaterial aufweisen. Ein Sicherheitsmaterial ändert die Eigenschaften des von der Leuchtvorrichtung abgegebenen Lichtes, beispielsweise dessen Spektrum, Ansprechzeit und/oder Abklingverhalten. Dazu können in dem Verkapselungsmaterial beispielsweise folgende Sicherheitsmaterialien bereitgestellt sein: fluoreszierende oder phosphoreszierende Stoffe, Farbstoffe zur Filterung des abgegebenen Lichts, Konversionsleuchtstoffe (z.B. upconversion (Lichtfrequenz-Aufwärtskonversion)oder downconversion (Lichtfrequenz-Aufwärtskonversion)) zur Verschiebung des Emissionsspektrums des ausgesendeten Lichtes, Effektpigmente. Durch das Sicherheitsmaterial können dem von der Leuchtvorrichtung abgestrahlten Licht weitere Informationsmerkmale aufgeprägt werden, welche als "2d-Level-Feature" (Merkmale zweiter Stufe) oder "3rd-Level-Feature" (Merkmale dritter Stufe) von Verifikationsgeräten, beispielsweise entsprechend eingerichteten Lesevorrichtungen, gemessen/ausgewertet werden können, um die Echtheit der dazugehörigen Chipkarte gemäß verschiedenen Das Sicherheitsmaterial kann auch dazu genutzt werden, bei Verwendung handelsüblicher LED-Bauteile und/oder OLED-Bauteile als Leuchtmittel der Leuchtvorrichtung ein Sicherheitsmerkmal einzubauen, um den Austausch gegen andere Leuchtmittel, welche über einen anderen, etwa korrumpierten, Chip (anstatt des authentischen Chips) angesteuert werden, zu verhindern.

In weiteren verschiedenen Ausführungsbeispielen wird ein Verfahren zum Herstellen einer Chipkarte bereitgestellt, wobei das Herstellungsverfahren aufweisen kann: Herstellen eines Chipkartenmoduls gemäß verschiedenen Ausführungsbeispielen und Anordnen des Chipkartenmoduls in einem Chipkartenkörper, so dass das Chipkartenmodul vollständig von dem Chipkartenkörper umgeben ist.

Gemäß weiteren Ausführungsbeispielen des Verfahrens kann das Anordnen des Chipkartenmoduls in einem Chipkartenkörper aufweisen: Ausbilden einer Vertiefung in einer Chipkartenschicht des Chipkartenkörpers; und Anordnen des Chipkartenmoduls in der Vertiefung.

Gemäß weiteren Ausführungsbeispielen kann das Verfahren ferner Bereitstellen von weiteren Chipkartenschichten über und/oder unter der das Chipkartenmodul aufweisenden Chipkartenschicht aufweisen.

Gemäß weiteren Ausführungsbeispielen des Verfahrens kann die Vertiefung derart ausgebildet werden, dass die von der Oberfläche des Abdeckmaterials des Chipkartenmoduls gebildete obere Fläche bündig mit der oberen Fläche der Chipkartenschicht abschließt, welche das Chipkartenmodul aufweist.

Gemäß weiteren Ausführungsbeispielen des Verfahrens kann der Chipkartenkörper mindestens in einem Volumen über der Leuchtvorrichtung des Chipkartenmoduls für das von der Leuchtvorrichtung emittierte Licht transparent ausgebildet werden.

Ausführungsbeispiele der Erfindung sind in den Figuren dargestellt und werden im Folgenden näher erläutert.

Es zeigen
- Figur 1: eine schematische Darstellung eines Chipkartenmoduls gemäß verschiedenen Ausführungsbeispielen;
- Figur 2: eine schematische Darstellung einer beispielhaften Chipkarte, in welcher das Chipkartenmodul gemäß verschiedenen Ausführungsbeispielen integriert ist;
- Figur 3: eine beispielhafte Ausführungsform des Chipkartenmoduls;
- Figur 4: eine weitere beispielhafte Ausführungsform des Chipkartenmoduls;
- Figur 5: eine noch weitere beispielhafte Ausführungsform des Chipkartenmoduls;
- Figur 6: ein beispielhaftes Leuchtmittel, welches in dem Chipkartenmodul gemäß verschiedenen Ausführungsbeispielen angeordnet sein kann;
- Figur 7: einen beispielhaften Aufbau einer Chipkarte, in welcher das Chipkartenmodul gemäß verschiedenen Ausführungsbeispielen integriert ist;
- Figur 8: ein Verfahren zum Herstellen des Chipkartenmoduls gemäß verschiedenen Ausführungsbeispielen;
- Figur 9: ein Verfahren zum Herstellen einer Chipkarte, welche das Chipkartenmodul gemäß verschiedenen Ausführungsbeispielen aufweist;
- Figur 10: ein Gesamtsystem aufweisend eine Chipkarte gemäß verschiedenen Ausführungsbeispielen und eine Leseeinheit;
- Figur 11: ein Displaymodul gemäß verschiedenen Ausführungsbeispielen;
- Figur 12: ein weiteres Displaymodul gemäß verschiedenen Ausführungsbeispielen;
- Figur 13: eine schematische Querschnittsansicht eines Displaymoduls gemäß verschiedenen Ausführungsbeispielen;
- Figuren: 14A und 14B jeweils eine schematische Ansicht einer Chipkarte gemäß verschiedenen Ausführungsbeispielen in einer Querschnittsansicht;
- Figur 15: eine mögliche Ausgestaltung einer Maskenschicht des Displaymoduls gemäß verschiedenen Ausführungsbeispielen;
- Figur 16: eine weitere Ausführungsform der Chipkarte; und
- Figur 17: eine Ausführungsform des Displaymoduls mit darin angeordneten Sicherheitsmaterialien.

In der folgenden ausführlichen Beschreibung wird auf die beigefügten Zeichnungen Bezug genommen, die einen Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

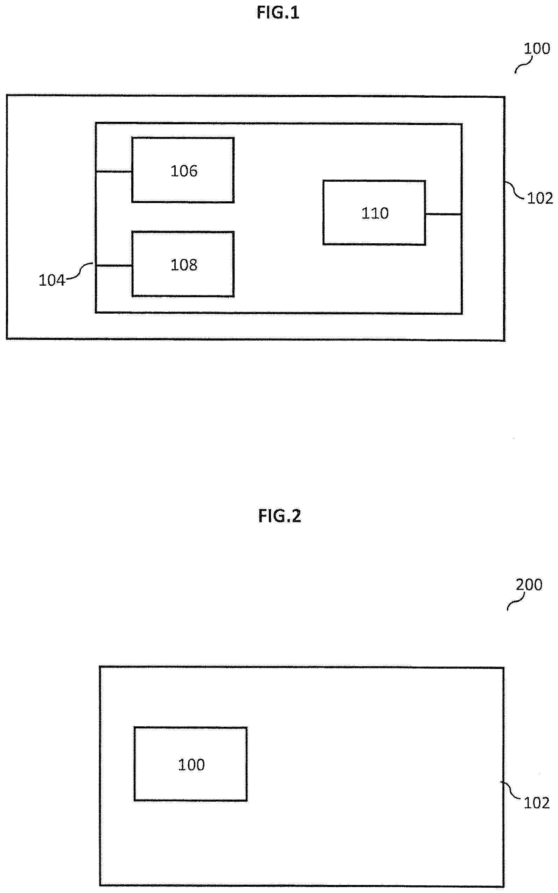

In **Fig.1** ist eine beispielhafte Ausführungsform eines Chipkartenmoduls 100 gezeigt. Das Chipkartenmodul 100 weist einen Chipkartenmodulträger 102 auf. Auf dem Chipkartenmodulträger 102 ist eine Verdrahtungsstruktur 104 ausgebildet. Ferner sind auf dem Chipkartenmodulträger 102 ein integrierter Schaltkreis 106, welcher mit der Verdrahtungsstruktur 104 elektrisch gekoppelt ist, eine Chipkartenmodul-Antenne 110, welche auf dem Chipkartenmodulträger angeordnet ist und mit der Verdrahtungsstruktur elektrisch gekoppelt ist; und eine Leuchtvorrichtung 108 angeordnet, welche ebenfalls mit der Verdrahtungsstruktur 104 elektrisch gekoppelt ist.

In **Fig.2** ist eine schematische Darstellung einer beispielhaften Chipkarte 200 gezeigt, in welcher das Chipkartenmodul 100 gemäß verschiedenen Ausführungsbeispielen integriert sein kann. Die beispielhafte Chipkarte 200 kann ein Chipkartenmaterial 202 aufweisen, welches beispielsweise in Form von Chipkartenschichten vorliegen kann. Das Chipkartenmodul 100 gemäß verschiedenen Ausführungsbeispielen kann dabei in der beispielhaften Chipkarte 200 derart angeordnet/integriert sein, dass das Chipkatenmodul 100 vollständig von dem Chipkartenmaterial 202 umgeben ist. Dabei kann das Chipkartenmodul 100 gemäß verschiedenen Ausführungsbeispielen in einer Chipkartenschicht eingebettet/einlaminiert vorliegen und diese Chipkartenschicht kann von weiteren Chipkartenschichten umgeben sein.

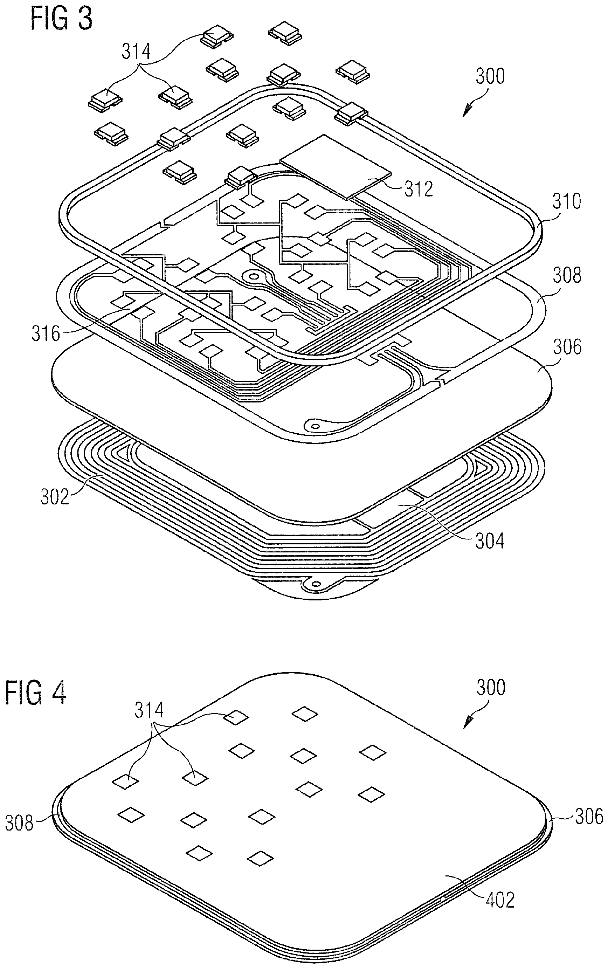

In **Fig.3** ist ein Chipkartenmodul 300 gemäß verschiedenen Ausführungsbeispielen in einer perspektivischen Explosionsdarstellung dargestellt. Das Chipkartenmodul 300 gemäß verschiedenen Ausführungsbeispielen kann auf einem Chipkartenmodulträger 306 (nachfolgend auch als Träger bezeichnet) aufgebaut sein, welcher eine Dicke im Bereich von etwa 25 µm bis etwa 50 µm aufweisen kann. Der Träger 306 kann eine rechteckige Form mit abgerundeten Kanten aufweisen. Der Träger 306 kann beispielsweise Epoxidharz, Polyimid (PI), FR4 (mit Epoxidharz getränkte Glasfasermatte), PET (Polyethylenterephthalat), PC (Polycarbonat), PVS (Polyvinylsiloxan), PET (Polyethylenterephthalat), PMMA (Polymethylmethacrylat), ABS (Acrylnitril-Butadien-Styrol) oder PVC (Polyvinylchlorid) aufweisen oder aus einem dieser Materialen oder einer Mischung draus bestehen. Generell können übliche für die Fertigung von Chipkartenkörpern verwendete Materialen verwendet werden. Der Träger 306, dessen Grundfläche eine Grundfläche für das Chipkartenmodul 300 gemäß verschiedenen Ausführungsbeispielen definieren kann, kann eine Abmessung von beispielsweise 13 mm x 11,8 mm aufweisen. Denkbar ist jedoch auch eine beliebige andere Abmessung, welche letztendlich an die Umgebung angepasst werden kann, in welcher das Chipkartenmodul 300 verwendet werden kann, das heißt beispielsweise an den in einer dazugehörigen Chipkarte verfügbaren Platz.

Auf einer ersten Fläche des Chipkartenmodulträgers 306, beispielsweise auf einer oberen Fläche des Chipkartenmodulträgers 306, kann die Verdrahtungsstruktur 308 bereitgestellt sein. Die Verdrahtungsstruktur 308 kann beispielsweise aus einer Metallisierungsschicht gebildet sein und zur elektrischen Verbindung der Komponenten/Bauteile des Chipkartenmoduls 300 gemäß verschiedenen Ausführungsbeispielen eingerichtet sein. Die Verdrahtungsstruktur 308, etwa Leiterbahnen und/oder Kontaktstellen der Verdrahtungsstruktur, können eine Dicke im Bereich von etwa 5 µm bis etwa 30 µm haben und ein elektrisch leitfähiges Material aufweisen, beispielsweise Kupfer, eine Kupferlegierung und/oder eine Eisennickellegierung oder auch Mischungen daraus. Obwohl in Figur 3 die Verdrahtungsstruktur 308 nur auf der oberen Fläche des Trägers 306 angeordnet dargestellt ist, kann ein Teil der Verdrahtungsstruktur 308 auch auf der anderen Fläche des Trägers 306 ausgebildet sein, beispielsweise auf der unteren Fläche der Trägers 306. Anders ausgedrückt können ein oberer Teil und ein unterer Teil der Verdrahtungsstruktur 308 bereitgestellt sein, wobei diese mittels in dem Träger bereitgestellten Durchführungen miteinander in elektrischem Kontakt stehen können.

Der untere Teil der Verdrahtungsstruktur 308 kann beispielsweise eine Antenne 302 aufweisen, welche in Form von Leiterbahnwindungen vorliegen kann, die in einem Randbereich der Grundfläche des Chipkartenmoduls 300 verlaufen. Der obere Teil der Verdrahtungsstruktur 308 kann Kontaktstellen 316 aufweisen, an welchen Leuchtmittel 314 platziert werden können, wobei die Gesamtheit der Leuchtmittel 314 eine Leuchtvorrichtung bildet. Jede der Kontaktstellen 316 kann einen Kathoden- und einen Anodenanschluss aufweisen, so dass ein an einer Kontaktstelle 316 platziertes Leuchtmittel 314 mit Strom versorgt werden kann.

Als Leuchtmittel 314 können LEDs (lichtemittierende Dioden) oder OLEDs (organische LED) verwendet werden. Im Falle, dass LEDs benutzt werden, können diese als verkapselte (gehäuste) LEDs vorliegen, beispielsweise als SMD-Bauteile (SMD: surface-mounted device - oberflächenmontierbare Bauteile). Die LEDs können aber auch als LED-Halbleiterchips vorliegen, welche mittels Drahtbonden mit den entsprechenden Kontaktstellen 316 elektrisch verbunden werden. Ferner können die LEDs mittels der Flip-Chip-Montagetechnik (Wende-Montage) an die entsprechenden Kontaktstellen 316 befestigt werden. Die Leuchtmittel 314 können dabei in einer zweckmäßigen Anordnung auf einer Fläche des Trägers 306 angeordnet sein, in diesem beispielhaften Fall auf der oberen Fläche des Trägers 306 (und auf der Metallisierungsstruktur 308). Dabei können die Leuchtmittel 314 in beliebiger Weise gemischt werden, d.h. es können sowohl LEDs wie auch OLEDs zum Einsatz kommen, wobei auch gleichzeitig verschiedene Befestigungstechniken verwendet werden können (beispielsweise Drahtbonden und Flip-Chip-Montage). Beispielsweise können picoLEDs als Leuchtmittel 314 verwendet werden, bei welchen es sich um besonders dünne LED-Halbleiterchips handelt (welche beispielsweise von Osram oder Rohm hergestellt werden), welche eine Bauteilhöhe im Bereich von etwa 180 µm bis etwa 250 µm, beispielsweise 200 µm aufweisen.

Die Leuchtmittel 314 können beispielsweise so angeordnet sein, dass sie eine Anzeige bilden, welche zwei Siebensegmentanzeigen aufweist. Dieses ist jedoch nur eine von vielen möglichen Anordnungsvariationen der Leuchtmittel 314, wobei jedes von ihnen in seiner Farbe, Helligkeit, Abmessung und weiteren Darstellung relevanter Parameter sich von den anderen Leuchtmitteln 314 unterscheiden kann. Jedenfalls sind die Leuchtmittel 314 mittels der Verdrahtungsstruktur 308 mit einem Chip 312 verbunden, welcher auf der oberen Fläche des Trägers 306 (und auf der Verdrahtungsstruktur 308) angeordnet sein kann. Der Chip 312 oder alternativ eine dedizierte Steuerungseinrichtung für die Leuchtvorrichtung kann auch auf der anderen Fläche des Trägers 306 angeordnet sein. Die Leuchtvorrichtung kann auch als eine größere, durchgehende OLED-Fläche ausgebildet sein, wobei innerhalb dieser Fläche unterschiedliche organische Emitter-Schichten enthalten sein können, so dass insgesamt eine farbige Anzeige gebildet werden kann.

Bei dem Chip 312 kann es sich um eine integrierte Schaltung handeln, welche eingerichtet sein kann entsprechende Chipkartenfunktionen auszuführen, unter anderem die Leuchtmittel 314 anzusteuern. Mittels der Verdrahtungsstruktur 308 kann der Chip 312 mit weiteren Komponenten/Bauelementen wie etwa Spulen, Kondensatoren, Speicherblöcken und/oder weiteren funktionalen Elementen elektrisch verbunden sein. Der Chip 312 kann beispielsweise eine rechteckige Form mit einer Abmessung von etwa 2,1 mm mal 3 mm und einer Bauteilehöhe in einem Bereich von etwa 25 µm bis etwa 100 µm, beispielsweise 50 µm aufweisen.

Um den Chip 312 vor einer übermäßigen mechanischen Beanspruchung zu schützen, kann auf der oberen Fläche des Trägers 306 und/oder auf der unteren Fläche des Trägers 306 ein verstärkter Bereich 304 vorgesehen sein. Der verstärkte Bereich 304 kann beispielsweise als eine Metallplatte oder als eine Schicht aus einem anderen Material eingerichtet sein, in etwa von der Größe der Grundfläche des Chips 312 oder etwas größer, wobei der verstärkte Bereich 304 einen höheren Steifigkeitswert als der elastische Träger 306 aufweisen kann. Dadurch können auf dem Chipkartenmodul im Bereich des Chips 312 (womöglich auf dieses) wirkende mechanische Kräfte mittels des verstärkten Bereichs 304 auf dessen Umgebung übertragen werden und dadurch kann der Chip 312 vor Beschädigung, wie etwa Durchbrechen, geschützt werden.

Das Chipkartenmodul 300 gemäß verschiedenen Ausführungsbeispielen kann ferner einen Ring 310 aufweisen, welcher auf der Trägerfläche 306 entlang des Randes der Grundfläche des Chipkartenmoduls 300 verläuft. Anders ausgedrückt kann der Ring 310 grundsätzlich die Form der Umrisslinie des Trägers 306 aufweisen. Er kann jedoch ein wenig kleiner ausgestaltet sein, so dass er in einem Abstand vom Rand des Trägers 306 weg auf diesem angeordnet sein kann. Die Verdrahtungsstruktur 308 und darauf angeordnete Komponenten/Bauelemente wie etwa die Leuchtmittel 314 und den Chip 312 können von dem Ring 310 umgeben sein. Der Ring 310 kann als Versteifungsstruktur fungieren und dem Chipkartenmodul 300 gemäß verschiedenen Ausführungsbeispielen mehr Steifigkeit verleihen. Zusätzlich kann der Ring 310 als Vergießring fungieren, wenn der Innenbereich des Chipkartenmoduls 300 über der Verdrahtungsstruktur 308 mit einer Vergussmasse (nicht in Figur 3 dargestellt) als Abdeckmaterial ausgefüllt wird. Der Vergießring verhindert dann ein Zerlaufen der Vergussmasse. Das Abdeckmaterial, welches das Chipkartenmodul 300 bedeckt, beispielsweise die Vergussmasse, muss jedoch nicht zwangsläufig durch den Ring 310 begrenzt sein. Der Ring 310 kann auch nur temporär während des Herstellungsprozesses, beispielsweise als Schablone, verwendet werden und kann nach dem Aushärten des Abdeckmaterials wieder entfernt werden.

Das in Fig.3 in der perspektivischen Explosionsdarstellung gezeigte Chipkartenmodul 300 gemäß verschiedenen Ausführungsbeispielen kann eine Bauteildicke in einem Bereich von etwa 350 µm bis etwa 450 µm aufweisen.

In **Fig.4** ist das Chipkartenmodul 300 gemäß verschiedenen Ausführungsbeispielen in einer zusammengesetzten Form gezeigt. In dieser Darstellung ist auf der auf dem Träger 306 angeordneten Verdrahtungsstruktur 308 und den darauf angeordneten Komponenten/Bauelementen, wie etwa den Leuchtmitteln 314 und dem Chip 312, eine Abdeckschicht 402 angeordnet. Neben gängigen Epoxidharzbasierten Materialien für die Abdeckschicht eignen sich folgende Materialien, da Sie mit dem Chipkarten-Material kompatibel sind: PET (Polyethylenterephthalat), PC (Polycarbonat), PVS (Polyvinylsiloxan), PET (Polyethylenterephthalat), PMMA (Polymethylmethacrylat), ABS (Acrylnitril-Butadien-Styrol) PVC (Polyvinylchlorid oder TPU (thermoplastisches Polyurethan). In Fig.4 sind jedoch zur besseren Übersichtlichkeit nur die Leuchtmittel 314 angedeutet, welche sich unterhalb der Abdeckschicht 402 befinden. Die Abdeckschicht 402 kann beispielsweise aus einer Vergussmasse hergestellt sein, welche nach Bestücken der Verdrahtungsstruktur 308 mit den entsprechenden Bauteilen/Komponenten über diese gegossen wird. Der Ring 310 verhindert dabei das Zerlaufen der Vergussmasse, so dass diese über dem Träger 306 Erstarren kann und eine Versiegelungsschicht bilden kann. Damit bilden die Leuchtmittel 314, welche zusammen mit dem Chip 312 auf der oberen Fläche der Trägers 306 angeordnet sind und von der Abdeckschicht 402 bedeckt sind, einen integralen Bestandteil des Chipkartenmoduls 300 gemäß verschiedenen Ausführungsbeispielen. Alternativ kann die Abdeckschicht 402 eine Mold-Kappe (Gussform-Kappe) aufweisen, welche anstatt der Vergussmasse zum Versiegeln des Chipkartenmoduls 300 gemäß verschiedenen Ausführungsbeispielen verwendet werden kann. Hierbei kann der Ring 310 in seiner Funktion als Versteifungsstruktur verwendet werden, er kann aber auch weggelassen werden, da die Mold-Kappe als fertige Struktur ohne Erstarrungsphase aufgebracht wird, so dass ihrem Zerfließen nicht entgegengewirkt werden braucht.

Die Abdeckschicht 402 hat zusätzlich den Effekt, dass sie alle Komponenten/Bauelemente, auf dem Träger 306, etwa den Chip 312 und die Leuchtmittel 314 auf der Verdrahtungsstruktur 308, bedecken kann und eine glatte Oberfläche des Chipkartenmoduls 300 gemäß verschiedenen Ausführungsbeispielen bilden kann, welche die Bauteildicke des Chipkartenmoduls 300 vernachlässigbar vergrößern kann. Die Bauteildicke des Chipkartenmoduls 300 kann im Wesentlichen von der Dicke des Trägers 306 und dem auf dem Träger 306 angeordneten Bauteil mit der größten Bauteildicke bestimmt sein. Die Rückseite des Trägers 306, auf welchem wie in Fig.3 gezeigt ist, die Antenne 302 und der verstärkte Bereich 304 angeordnet sein können, kann von sich aus eine im Wesentlichen glatte Oberfläche aufweisen oder kann bei Bedarf ebenfalls mit einer Abdeckschicht bedeckt sein, so dass eine ebene Oberfläche ausgebildet werden kann. Eine glatte Vorder- und Rückseite des Chipkartenmoduls 300 gemäß verschiedenen Ausführungsbeispielen kann das Einlaminieren des Chipkartenmoduls 300 in einer Chipkarte (in einem Chipkartenkörper) vereinfachen, da keine Ausgleichsschichten über/unter dem Chipkartenmodul aufgetragen werden müssen, sondern das Chipkartenmodul beispielsweise einfach in eine dafür entsprechend vorgesehene Vertiefung, beispielsweise eine Ausstanzung, in einer Schicht des Chipkartenkörpers eingesetzt werden kann.

Unabhängig von der Art der Abdeckschicht 402 ist diese mindestens im Bereich über den Leuchtmitteln 314 für deren Licht transparent, so dass das von den Leuchtmitteln 314 erzeugte Licht die Abdeckschicht 402 passieren kann und nach außen abgegeben werden kann. Dazu kann bereits das als Vergießmaterial zum Ausbilden der Abdeckschicht 402 verwendete Material oder das Material der Mold-Kappe für das Licht der Leuchtmittel 314 transparent sein.

Wie bereits erwähnt, können als Leuchtmittel 314 LEDs und/oder OLEDs verwendet werden. Durch die Möglichkeit der Verwendung von dünnen LEDs als unkomplizierte, unempfindliche und als Massenware herstellbare Standardkomponenten kann ein Hersteller des Chipkartenmoduls 300 gemäß verschiedenen Ausführungsbeispielen auf eine breite Lieferantenbasis für diese Komponente zurückgreifen. Es sei nochmal darauf hingewiesen, dass obwohl die in Fig.3 und Fig.4 gezeigte Leuchtvorrichtung einzelne diskrete Leuchtmittel 314 aufweist, beliebige Teile und/oder zusätzliche Teile der Leuchtvorrichtung auch als flächige Leuchtelemente ausgebildet sein können, beispielsweise auf Basis einer OLED-Schicht, welche als eine Einschicht- oder eine Mehrschicht-OLED ausgebildet sein kann. Anders ausgedrückt kann der Hersteller des Chipkartenmoduls 300 gemäß verschiedenen Ausführungsbeispielen die Art und Anordnung der Leuchtvorrichtung zweckmäßig anpassen, wobei die Leuchtvorrichtung stets ein integraler Bestandteil des Chipkartenmoduls 300 ist (mit diesem materialschlüssig verbunden ist) und zusammen mit anderen Komponenten, wie etwa dem Chip 312, welcher auf der Verdrahtungsstruktur 308 angeordnet sein kann, durch die Abdeckschicht 402 nach außen hin versiegelt sein kann.

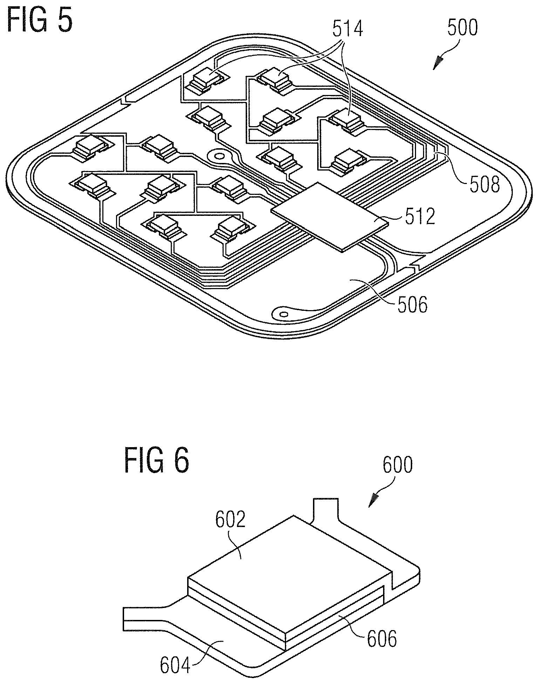

In **Fig.5** ist ein weiteres Chipkartenmodul 500 gemäß verschiedenen Ausführungsbeispielen gezeigt, welche funktional den gleichen Aufbau haben kann wie das in Fig.3 oder in Fig.4 gezeigte Chipkartenmodul. Im Unterschied dazu dient jedoch hier ein (multifunktionales) Trägerband 506 als Chipkartenmodulträger für das Chipkartenmodul 500 gemäß verschiedenen Ausführungsbeispielen. Das Trägerband 506 kann bereits eine darauf ausgebildete Verdrahtungsstruktur 508 samt Leuchtmitteln 514 aufweisen und braucht beispielsweise nur noch mit dem Chip 512 bestückt zu werden. Anders ausgedrückt kann die Leuchtvorrichtung in Form von Leuchtmitteln 514 als bereits vorhandener integraler Bestandteil des Trägerbandes 506 gesehen werden. Alle weiteren Komponenten und/oder Herstellungsschritte wie etwa der Ring 310 und/oder das Abscheiden der Vergussmasse über dem Trägerband 506 oder alternativ dazu das Anordnen der Mold-Kappe über dem Trägerband 506 können denen entsprechen, die in Zusammenhang mit der in Fig.3 beschrieben/gezeigt worden sind.

Im Allgemeinen kann es sich bei dem Trägerband 506 um ein elektrisch isolierendes, flexibles Substrat handeln, welches beispielsweise Polyimid (PI), FR4 (mit Epoxidharz getränkte Glasfasermatte), BT-Epoxid oder ein sonstiges üblicherweise für die Fertigung von Chipkartenkörpern verwendetes Materialen aufweisen oder aus einer Mischung dieser Materialien bestehen kann. Das Trägerband 506 weist die bereits fest mit diesem verbundene Verbindungsstruktur 508 auf, beispielsweise in Form von Leiterbahnen, die auf dem Trägersubstrat beispielsweise mittels Elektroplattieren bereitgestellt sein können. Die Verbindungsstruktur 508 kann sowohl auf der Vorderseite des Trägerbandes 506 (wie in Fig.5 zu sehen) als auch zusätzlich auf der Rückseite des Trägerbandes 506 ausgebildet sein. Die Leuchtvorrichtung, also die in Fig.3 bis Fig.5 gezeigten Leuchtmittel 314, 514, können bereits auf dem Trägerband 506 ausgebildet sein, beispielsweise als vereinzelte LEDs und/oder OLEDs. Die Leuchtvorrichtung kann aber auch eine flächige OLED-Anzeige aufweisen, welche auf dem Trägerband 506 ausgebildet ist. Allgemein gesprochen kann also das Trägerband 506 unter kombinierter Verwendung verschiedener Herstellungstechnologien (z.B. OLED und Elektroplattieren) gefertigt werden. Zusätzlich zu den eben beschriebenen Elementen können auch diverse weitere elektronische Bauelemente wie etwa Spulen, Kondensatoren, Speicherbausteine auf dem Trägerband 506 ausgebildet sein wie auch die Chipkartenmodulantenne, welche beispielsweise an der Rückseite des Trägerbandes 506 (nicht in Fig.5 dargestellt) ausgebildet sein kann.

Bei Verwendung des (multifunktionalen) Trägerbandes 506 kann die Anzahl von Interconnects (Zwischenkontaktverbindungen) reduzieren werden gegenüber der Verwendung eines entsprechenden Chipkartenmodulträgers, welche mit vereinzelten Leuchtmitteln (beispielsweise einzelnen LEDs oder OLEDs) bestückt wird. Dies kann den Effekt haben, dass potentielle Ausfallstellen vermieden werden können. Zudem ermöglicht die in Fig.5 gezeigte Variante eines Chipkartenmoduls einen dünneren Modulaufbau, welcher beispielsweise im Bereich von ungefähr 200 µm liegen kann. Im Ergebnis kann ein Chipkartenmodul mit einer höheren Flexibilität gefertigt werden, wodurch sich im Endeffekt flexiblere Mehrschichtaufbauten bei Chipkarten realisieren lassen.

In **Fig.6** ist eine beispielhafte Ausführungsform eines Leuchtmittels 600 dargestellt. Das dargestellte Leuchtmittel 600 kann mindestens einem der in Fig.5 gezeigten Leuchtmittel 514 entsprechen und damit an einer der Kontaktstellen innerhalb der Verdrahtungsstruktur 508 angeordnet sein. Bei dem in Fig.6 dargestellten beispielhaften Leuchtmittel 600 handelt es sich um eine OLED, welche eine lichtemittierende Schicht 606 aufweist, die zwischen einer ersten Elektrode 604 und einer zweiten Elektrode 602 angeordnet ist. Die zweite Elektrode 602 kann dabei für das Licht, welches von der lichtemittierenden Schicht 606 abgestrahlt wird, transparent sein. Das in Fig.6 dargestellte Leuchtmittel 600 kann zusätzlich von einer Versiegelungsschicht umgeben sein. Die Versiegelungsschicht kann aber auch weggelassen werden und ihre Funktion kann von der in Fig.3 und in Fig.4 gezeigten Abdeckschicht übernommen werden.

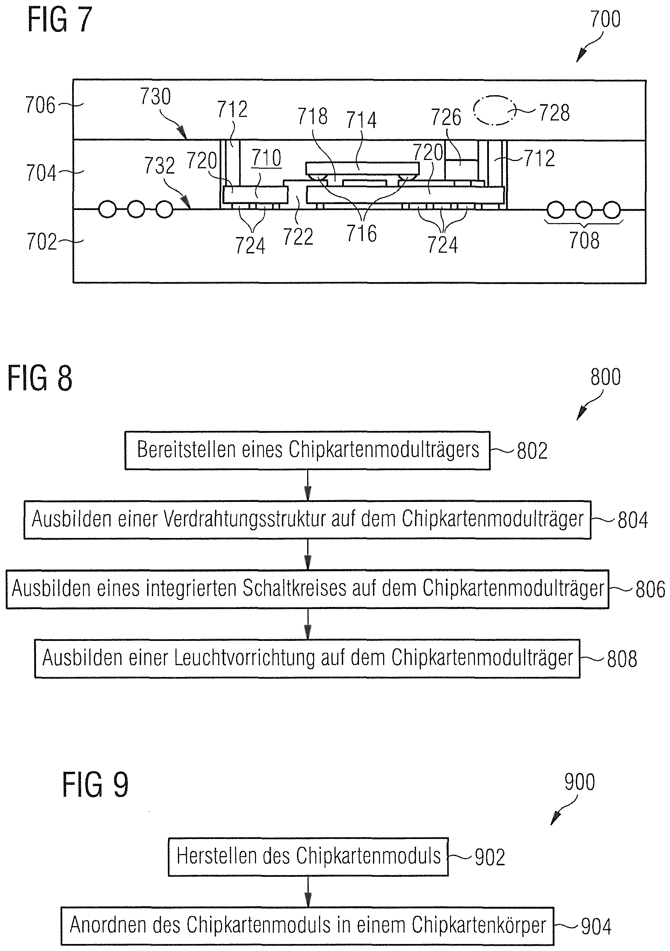

In **Fig.7** ist ein beispielhafter Aufbau einer Chipkarte 700 dargestellt, in welcher ein Chipkartenmodul gemäß verschiedenen Ausführungsbeispielen implementiert ist. Es ist hierbei anzumerken, dass die Proportionen der einzelnen Teile/Komponenten zueinander in Fig.7 nicht als Hinweis auf tatsächliche Abmessungen von Teilen/Komponenten und deren Proportionen zueinander bei tatsächlichen Chipkarten verstanden werden sollen.

Die in Fig.7 dargestellte beispielhafte Chipkarte 700 kann drei Schichten aufweisen: eine erste Schicht 702, eine zweite Schicht 704, und eine dritte Schicht 706. Hierbei kann jede der soeben genannten drei Schichten jeweils stellvertretend für mehrere Schichten sein. Die unterste Lage oder Schicht der ersten Schicht 702 kann eine Unterseite der Chipkarte 700 darstellen, die oberste Lage oder Schicht der dritten Schicht 706 kann eine Oberseite der Chipkarte 700 darstellen. Mit der Oberseite und der Unterseite der Chipkarte 700 sind jeweils die Oberflächen gemeint, welche der Benutzer beim Hantieren mit der Chipkarte anfasst. Die zweite Schicht 704 kann die funktionalen Schichten einer Chipkarte repräsentieren, wobei hier zur Veranschaulichung nur eine zweite Schicht 704 als eine funktionale Schicht beschrieben wird. Moderne Chipkarten können heutzutage eine Übereinanderanordnung von etwa zehn, zwölf oder mehr Schichten aufweisen.

Bei der zweiten Schicht 704 kann es sich beispielsweise um eine Schicht aus etwa PVC, ABS, Polyester oder Polycarbonat handeln, welche eine Grundfläche aufweist, die der Grundfläche der Chipkarte 700 gemäß verschiedenen Ausführungsbeispielen entspricht. In der zweiten Schicht 704 kann ein Bereich freigelegt sein, in welchem ein Chipkartenmodul eingesetzt sein kann, beispielsweise das in den Fig.3 bis Fig.5 gezeigte Chipkartenmodul gemäß verschiedenen Ausführungsbeispielen. Anders ausgedrückt kann die zweite Schicht 704 als eine Trägermatrix fungieren, in welcher das Chipkartenmodul eingebettet sein kann.

Gemäß den Ausführungen zu den Fig.3 bis Fig.5 kann das Chipkartenmodul gemäß verschiedenen Ausführungsbeispielen auf einem Träger 720 (oder einem Trägerband) aufgebaut sein, auf welchem die Verdrahtungsstruktur angeordnet sein kann. Die Verdrahtungsstruktur kann auf einer Oberseite und einer Unterseite des Trägers 720 angeordnet sein, wobei die beiden Verdrahtungsstrukturbereiche miteinander mittels einer Durchkontaktierung 722 elektrisch verbunden sein können. Auf einer Seite des Trägers 720, beispielsweise auf der Oberseite davon, können der Chip 714 sowie die Leuchtmittel 726 angeordnet sein und mittels der Verdrahtungsstruktur miteinander in elektrischem Kontakt stehen. Der Chip 714 kann dabei mittels Lotkugeln (stud bumps), welche beispielsweise Gold oder Nickel-Gold aufweisen können, mit der Verdrahtungsstruktur in elektrischem Kontakt stehen. Der Bereich unter und/oder um den Chip 714 kann mit einem Underfill (Unterfüllung) ausgefüllt sein und den Chip 714 mit dem Träger 720 (oder dem Trägerband) mechanisch verbinden. Ein Schrumpfen des Underfill während des Herstellungsprozesses des Chipkartenmoduls kann bewirken, dass die Lotkugeln an die Kontaktflächen gedrückt werden. Auf der anderen Seite des Trägers 720, beispielsweise auf der Unterseite davon, kann die Chipkartenmodulantenne 724 angeordnet sein. Entlang des Randes des Trägers 720 kann der Ring 712 angeordnet sein. Das Restvolumen 710 über der Oberseite 720 des Trägers 720, welches von dem Ring 720 umgeben ist, kann mit einer Vergussmasse oder alternativ von der Mold-Kappe ausgefüllt sein. Die Oberfläche der Vergussmasse oder der Mold-Kappe kann dabei mit der oberen Fläche 730 der zweiten Schicht 704 bündig abschließen, so dass die zweite Schicht 704 insgesamt eine glatte obere Fläche 730 aufweist.

An der unteren Fläche 732 der zweiten Schicht 704 kann eine Chipkartenantenne 708 ausgebildet sein. Die Chipkartenantenne 708 kann in Form von Leiterbahnenwindungen vorliegen, welche von der Mitte des Chipkartemoduls in radialer Richtung zu den Rändern der Chipkarte 700 hin betrachtet im Wesentlichen außerhalb des Bereiches des Chipkartenmoduls um dieses herum verlaufen. Unter den Rändern der Chipkarte 700 gemäß verschiedenen Ausführungsbeispielen sind dabei die Kanten der Chipkarte 700 zu verstehen, welche gemeinsam von den Rändern der ersten Schicht 702, der zweiten Schicht 704 und der dritten Schicht 706 gebildet werden. Die Chipkartenantenne 708 kann alternativ auch an der oberen Fläche 730 der zweiten Schicht 704 ausgebildet sein oder aber auch innerhalb einer beliebigen Schicht oder zwischen zwei beliebigen Schichten innerhalb der Chipkarte 700. Anders ausgedrückt ist die vertikale Lage der Ebene beliebig, in welcher die Chipkartenantenne 708 angeordnet ist, so dass zwischen der Chipkartenschicht, welche das Chipkartenmodul aufweist (in diesem Beispiel die zweite Schicht 704), und der Chipkartenantenne 708 weitere Chipkartenschichten angeordnet sein können. Im Betrieb der Chipkarte 700 in einem Magnetfeld einer Leseeinrichtung koppelt die Chipkartenmodulantenne 724 induktiv an die Chipkartenantenne 708, welche die Funktion einer Booster-Antenne übernimmt. Dabei kann mittels der Booster-Antenne und der Chipkartenmodulantenne 724 dem Chipkartenmodul Energie aus dem Magnetfeld der Lesevorrichtung bereitgestellt werden, so dass der Chip 714 betrieben werden kann und bei Bedarf die Leuchtmittel 726 betrieben werden können.

Ein Bereich 728 in der dritten Schicht 706 der beispielhaften Chipkarte 700 ist für das Licht des Leuchtmittels 726 transparent ausgestaltet. Der Bereich 728 kann dabei mindestens einen Bereich umfassen innerhalb der dritten Schicht 706 zwischen der oberen Fläche 730 der zweiten Schicht 704 und der oberen Schicht der dritten Schicht 706 über dem mindestens einen Leuchtmittel 726. Anders ausgedrückt ist die dritte Schicht 706 derart ausgebildet, dass sie das von dem mindestens einen Leuchtmittel 726 erzeugte Licht durchlässt und an die Oberfläche, etwa die obere Fläche der dritten Schicht 706, der beispielhaften Chipkarte 700 durchdringen lässt. Somit kann die Leuchtvorrichtung beispielsweise als eine Anzeige genutzt werden, welche sich zwar im Inneren der Chipkarte 700 gemäß verschiedenen Ausführungsbeispiele befindet, deren Licht jedoch von außen durch die dritte Schicht 706 hindurch sichtbar ist.

In **Fig.8** ist ein Verfahren 800 zum Herstellen eines Chipkartenmoduls gemäß verschiedenen Ausführungsbeispielen veranschaulicht. In einem ersten Schritt 802 des Verfahrens 800 kann dieses Bereitstellen eines Chipkartenmodulträgers aufweisen. In einem zweiten Schritt 804 kann das Verfahren 800 Ausbilden einer Verdrahtungsstruktur auf dem Chipkartenmodulträger aufweisen. In einem dritten Schritt 806 kann das Verfahren 800 Ausbilden eines integrierten Schaltkreises auf dem Chipkartenmodulträger aufweisen, wobei der Schaltkreis mit der Verdrahtungsstruktur elektrisch gekoppelt ist. In einem fünften Schritt 808 kann das Verfahren 800 Ausbilden einer Leuchtvorrichtung auf dem Chipkartenmodulträger aufweisen, welche ebenfalls mit der Verdrahtungsstruktur elektrisch gekoppelt ist.

In **Fig.9** ist ein Verfahren 900 zum Herstellen einer Chipkarte veranschaulicht, welche das Chipkartenmodul gemäß verschiedenen Ausführungsbeispielen aufweist. Das Verfahren 900 kann zunächst einen ersten Schritt 902 des Herstellens eines Chipkartenmoduls gemäß verschiedenen Ausführungsbeispielen aufweisen. Das Verfahren 900 kann ferner in einem weiteren Schritt 904 Anordnen des Chipkartenmoduls in einem Chipkartenkörper aufweisen, so dass das Chipkartenmodul gemäß verschiedenen Ausführungsbeispielen vollständig von dem Chipkartenkörper umgeben ist.

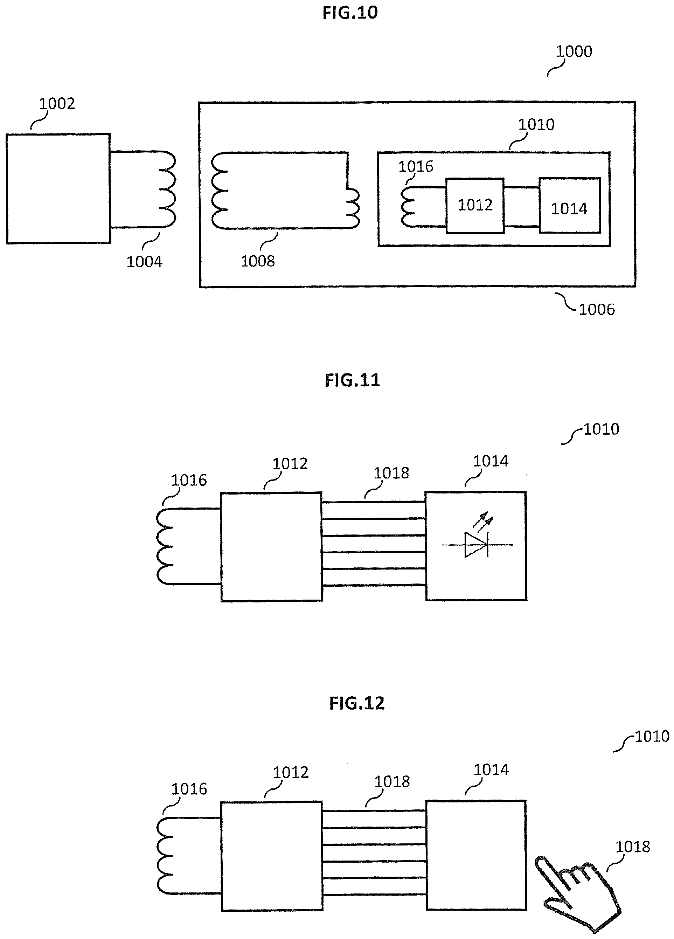

In **Fig.10** ist ein Gesamtsystem 1000 dargestellt, aufweisend eine Leseeinheit 1002 und ein Wert- und/oder Sicherheitsdokument in Form einer Chipkarte 1006. Das Gesamtsystem kann eingerichtet sein beispielsweise gemäß dem NFC-Standard zu kommunizieren. Innerhalb der ISO/IEC 14443 Norm wird die Leseeinheit 1002 als PCD (proximity coupling device - Nähekopplungseinrichtung) und die Chipkarte 1006 als PICC (proximity integrated circuit card - Nähekarte mit integriertem Schaltkreis) bezeichnet. Die Leseeinheit 1002 kann eine Leseeinheit-Antenne 1004 aufweisen, um kontaktlos mit der Chipkarte 1006 Daten austauschen zu können. Die Chipkarte 1006 weist ein Displaymodul 1010 (Anzeigenmodul) und eine Booster-Antenne 1008 auf. Das Displaymodul 1010 weist seinerseits eine Displaymodul-Antenne 1016 auf, welche an einen Schaltkreis 1012, beispielsweise einen integrierten Schaltkreis, beispielsweise einen Chip 1012 wie etwa einen Siliziumchip, gekoppelt ist. Der Chip 1012 ist elektrisch mit einer im Displaymodul 1010 angeordneten Leuchtvorrichtung 1014 gekoppelt, welche beispielsweise LEDs oder OLEDs als diskrete Leuchtmittel aufweisen kann. Die Kommunikation zwischen dem Displaymodul 1010 und der Leseeinheit 1002 erfolgt mittels der Booster-Antenne 1008, welche die Funktion einer vermittelnden Verstärkerantenne erfüllt. Sowohl die Kopplung zwischen der Booster-Antenne 1008 und der Leseeinheit 1002 als auch die Kopplung zwischen der Booster-Antenne 1008 und dem Displaymodul 1010 erfolgt in diesem beispielhaften Gesamtsystem 1000 induktiv, d.h. ohne dass entsprechende anfällige Kontaktstellen (Kontaktierungen) erforderlich sind. Die Chipkarte 1006 gemäß verschiedenen Ausführungsbeispielen ist derart eingerichtet, dass das vom Displaymodul 1010 erzeugte Licht aus der Chipkarte 1006 nach außen hin abgestrahlt werden kann. Die Wellenlänge des direkt vom Displaymodul 1010 abgestrahlten Lichts kann sich dabei von der Wellenlänge des Lichts unterscheiden, welches die äußerste Schicht der Chipkarte 1006 passiert und nach außen hin abgestrahlt wird, wo es beispielsweise von einem Nutzer der Chipkarte 1006 wahrgenommen werden kann. Zwischen der Leuchtvorrichtung 1014 des Displaymoduls 1010 und der äußersten Schicht der Chipkarte 1006 kann eine Konversionsschicht angeordnet sein, welche zum Umwandeln des direkt von der Leuchtvorrichtung 1040 abgestrahlten Lichts eingerichtet sein kann. Anders ausgedrückt kann sich die Wellenlänge des Lichts, welches ein Benutzer der Chipkarte 1006 als von der Chipkarte 1006 ausgehend wahrnimmt von der Wellenlänge des Lichts unterscheiden, welches von der Leuchtvorrichtung 1014 des Displaymoduls 1010 abgestrahlt wird. Bei dem Konversionsbereich kann es sich um einen Bereich handeln, welcher zur Frequenzkonvertierung des von der Leuchtvorrichtung 1014 abgestrahlten Lichts eingerichtet ist. Dabei kann die von der Leuchtvorrichtung 1014 abgestrahlte Strahlung mittels des Konversionsbereiches erhöht oder verringert werden. Bei dem Konversionsbereich kann es sich beispielsweise um einen Bereich handeln, welcher ein fluoreszierendes und/oder phosphoreszierendes Material aufweist. Ferner kann die Leuchtvorrichtung 1014 gemäß verschiedenen Ausführungsbeispielen zur Abgabe von nicht kognitiv erfassbaren Signalen eingerichtet sein, wie etwa zur Abstrahlung eines gepulsten Lichtes und/oder zur Darstellung eines Segment-Barcodes. Die genauere Ausgestaltung des Konversionsbereiches wird in nachfolgenden Figuren beschrieben.

In **Fig.11** ist eine mögliche Ausführungsform des Displaymoduls 1010 aus Fig.10 dargestellt. Die Leuchtvorrichtung 1014 ist mittels einer Verdrahtung 1018 mit dem Chip 1012 elektrisch verbunden. Der Chip 1012 ist an die Displaymodul-Antenne 1016 elektrisch gekoppelt, bei der es sich um die Chipkartenmodul-Antenne handeln kann. Wie in Fig.11 dargestellt, kann die Leuchtvorrichtung 1014 direkt an den Chip 1012 angeschlossen sein, d.h. beispielsweise ohne eine dazwischengeschaltete Treiberschaltung. Mit anderen Worten kann so eine Einzelchiplösung bereitgestellt werden, bei der nur ein integrierter Schaltkreis erforderlich ist.

In **FIG.12** ist weiteres Ausführungsbeispiel des Displaymoduls 1010 dargestellt. Das in Fig.12 gezeigte Displaymodul weist den gleichen strukturellen Aufbau auf wie das in Fig.11 gezeigte Displaymodul auf, so dass die gleichen Bezugszeichen für die funktional gleichen Komponenten verwendet werden. Im Unterschied zu dem in Fig.11 gezeigten Displaymodul 1010 weist jedoch das in Fig.12 gezeigte Displaymodul 1010 eine Leuchtvorrichtung 1014 auf, welche zugleich als ein tastempfindlicher Sensor eingerichtet ist. Anders ausgedrückt kann in diesem Ausführungsbeispiel die Leuchtvorrichtung 1014 sowohl zum Anzeigen von Informationen als auch zur Nutzung als verschleißfreies Eingabeelement verwendet werden. Für die Nutzung als Eingabeelement kann beispielsweise die Eigenkapazität der in der Leuchtvorrichtung 1014 angeordneten LEDs genutzt werden. Dabei kann die entsprechende LED angesteuert und ihr Entladeverhalten ausgewertet werden. Die Entladedauer wird beeinflusst, wenn die entsprechende LED abgedunkelt wird, z.B. wenn ein Nutzer seinen Finger in unmittelbare Nähe der Leuchtmittel, beispielsweise an die Oberfläche der Chipkarte, heranführt.

Dieses Eingabeelement kann für Bestätigungen, Informationseingaben oder für das Aktivieren des Sicherheitsdokumentes genutzt werden.

Bei dem Chip 1012 kann es sich beispielsweise um einen Sicherheits-Chip mit einem internen Controller mit kryptographischen Funktionalitäten handeln. Der Chip 1012 kann ferner zur Leistungsverwaltung (Powermanagement) eingerichtet sein und GPIOs (General Purpose Input/Output - allgemeiner Kontaktstift an einem integrierten Schaltkreis) zur Ansteuerung der diskreten Leuchtmittel der Leuchtvorrichtung 1014, beispielsweise der einzelnen LEDs oder OLEDs, aufweisen.

Um die Anzahl der Leuchtmittel innerhalb der Leuchtvorrichtung 1014 zu erhöhen, kann zu deren Ansteuerung ein Multiplexverfahren verwendet werden. Die einzelnen Leuchtmittel können durch ihre spezifische Anordnung innerhalb des Displaymoduls 1010 zur Bildung von numerischen oder alphanumerischen Anzeigen verwendet werden und damit zum Anzeigen von Zahlen und/oder Zeichen. Dieser Aspekt wird in den nachfolgenden Figuren genauer erläutert.

In einer weiteren nicht dargestellten Ausführungsform des Displaymoduls 1010 können die darauf angeordneten Leuchtmittel direkt an die Displaymodul-Antenne 1016 und nicht an entsprechende Anschlüsse am Chip 1012 angeschlossen werden. Dadurch kann die Leuchtvorrichtung 1014 für einen Benutzer eine optische Feldanzeige darstellen. Diese kann als eine Statusanzeige dienen und beispielsweise anzeigen, dass gerade eine drahtlose Datenkommunikation zwischen der Chipkarte 1006 und der Leseeinheit 1002 erfolgt oder einen Hinweis auf die Signalstärke der Leseeinheit geben.

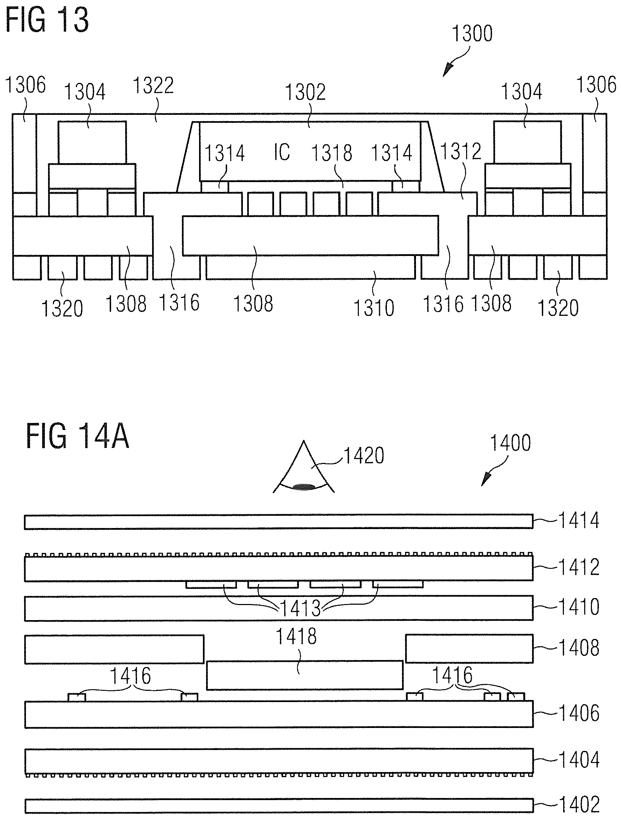

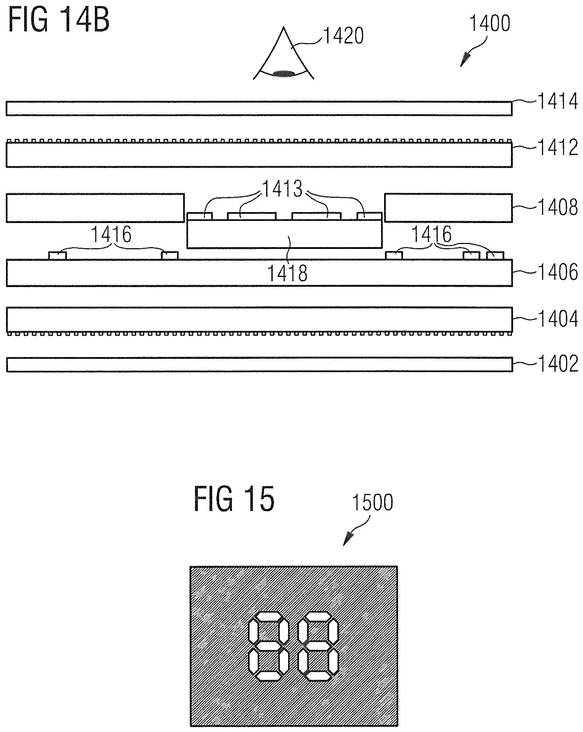

In **Fig.13** ist ein schematischer Querschnitt durch ein Displaymodul 1300 gemäß verschiedenen Ausführungsbeispielen dargestellt. Der in Fig.13 gezeigte Querschnitt ist dem in der zweiten Schicht 704 in Fig.7 ebenfalls im Querschnitt dargestellten Aufbau eines Chipkartenmoduls ähnlich. Die Proportionen der einzelnen Teile/Komponenten zueinander in Fig. 13 sollen nicht notwendigerweise als Hinweis auf tatsächliche Abmessungen von Teilen/Komponenten und deren Proportionen zueinander bei tatsächlichen Chipkarten verstanden werden. Das in Fig.13 dargestellte Displaymodul 1300 kann in einer Schicht innerhalb einer Anordnung von Schichten in einer Chipkarte angeordnet sein, wie es zum Beispiel in Fig.7 oder den Figuren 14A, 14B der Fall ist.

Das Displaymodul 1300 kann auf einem Träger (oder Trägerband) 1308 aufgebaut sein, welcher beispielsweise Epoxidharz, Polyimid (PI), FR4 (mit Epoxidharz getränkte Glasfasermatte), PET (Polyethylenterephthalat), PC (Polycarbonat), PVS (Polyvinylsiloxan), PET (Polyethylenterephthalat), PMMA (Polymethylmethacrylat), ABS (Acrylnitril-Butadien-Styrol) oder PVC (Polyvinylchlorid) aufweisen kann oder aus einem dieser Materialen oder einer Mischung draus bestehen kann. Auf dem Träger 1308 ist eine Verdrahtungsstruktur 1312 angeordnet, welche auf einer Oberseite und/oder auf einer Unterseite des Trägers 1308 ausgebildet sein kann, wobei die beiden Verdrahtungsstrukturteile dann miteinander mittels Durchkontaktierungen 1316 elektrisch verbunden sein können. Auf einer Seite des Trägers 1308, beispielsweise auf der Oberseite davon, können der Chip 1302 sowie die Leuchtmittel 1304, welche die Leuchtvorrichtung ausbilden, angeordnet sein und mittels der Verdrahtungsstruktur 1312 mit dem Chip 1302 elektrisch gekoppelt sein. Der Chip 1302 kann dabei mittels Lotkugeln 1314 (stud bumps), welche beispielsweise Gold oder Nickel-Gold aufweisen können, mit der Verdrahtungsstruktur 1312 in elektrischem Kontakt stehen. Der Bereich unter und/oder um den Chip 1302 kann mit einem Underfill 1318 (Unterfüllung) ausgefüllt sein und den Chip 1302 mit dem Träger 1308 (oder dem Trägerband) mechanisch verbinden. Ein Schrumpfen des Underfill 1318 während des Herstellungsprozesses des Displaymoduls 1300 kann bewirken, dass die Lotkugeln 1314 an die Kontaktflächen gedrückt werden. Auf der anderen Seite des Trägers 1308, beispielsweise auf der Unterseite davon, kann die Displaymodul-Antenne 1320 angeordnet sein. Die Displaymodul-Antenne 1320 kann mindestens eine Windung aufweisen, welche entlang des Randes des Displaymoduls 1300 angeordnet ist. Entlang des Randes des Trägers 1308 auf dessen Oberseite kann der Ring 1306 angeordnet sein, welcher bereits im Hinblick auf die in Fig.7 dargestellte Ausführungsform des Chipkartenmoduls beschrieben worden ist. Das Freivolumen 1322 über der Oberseite des Trägers 1308, welches von dem Ring 1306 begrenzt ist, kann mit einer Vergussmasse oder einem Verkapselungsmaterial ausgefüllt sein. Bei dem Verkapselungsmaterial kann es sich allgemein um ein Polymer handeln, beispielsweise um Epoxid (beispielsweise UVhärtendes Epoxid oder 2K-Epoxid), PET (Polyethylenterephthalat), PC (Polycarbonat), PVS (Polyvinylsiloxan), PET (Polyethylenterephthalat), PMMA (Polymethylmethacrylat) PVC (Polyvinylchlorid)oder TPU (thermoplastisches Polyurethan). An der Unterseite des Trägers 1308 kann in dem Bereich, über dem der Chip 1302 angeordnet ist, ein verstärkter Bereich 1310 vorliegen, beispielsweise in Form eines Plättchens aus einem harten oder steifen Material (beispielsweise Metall), welches dem Träger 1308 im Bereich des Chips 1302 mehr Stabilität im Hinblick auf mögliche Verbiegungen verleihen kann.

In **Fig.14A** ist ein schematischer Aufbau einer Chipkarte 1400 gemäß weiteren Ausführungsbeispielen im Querschnitt dargestellt. Im Folgenden wird die Abfolge der Schichten innerhalb der Chipkarte 1400 gemäß verschiedenen Ausführungsbeispielen beschrieben, angefangen von der untersten in Fig.14A dargestellten Schicht.

Die erste Schicht 1402 kann eine Materialschicht sein, welche eine Oberfläche der Chipkarte 1400 ausgebildet, beispielsweise die Unterseite der Chipkarte 1400, mit der ein Nutzer in haptischen Kontakt treten kann. Auf der ersten Schicht 1402 kann eine zweite Schicht 1404 angeordnet sein, welche einen Druckbogen aufweisen kann. Beim Druckbogen handelt es sich um eine bedruckte Folie mit dem grafischen Layout der Chipkarte.

Auf der zweiten Schicht 1404 kann eine dritte Schicht 1406 angeordnet sein, welche als Trägerschicht für Leiterbahnen 1416 dienen kann. Auf dieser Schicht kann das Displaymodul 1418 angeordnet sein. Um das Displaymodul 1418 herum kann eine Ausgleichsfolie 1408 angeordnet sein. Die Oberseite der Ausgleichsfolie 1408 kann bündig mit der Oberseite des Displaymoduls 1418 abschließen, so dass insgesamt das Displaymodul 1418 und die Ausgleichsfolie 1408 eine vierte Schicht bilden, welche eine ebene obere Fläche aufweist. Auf dieser ebenen Oberfläche ist eine fünfte Schicht 1410 angeordnet, welche einen Diffusor, also ein diffus streuendes Mittel aufweisen kann, etwa eine Diffusorfolie. Auf der Diffusorfolie kann eine sechste Schicht 1412 angeordnet sein, welche einen Druckbogen mit einer innenliegenden Maske 1413 aufweisen kann. In diesem Zusammenhang bedeutet innenliegend, dass die Maske 1413 auf der dem Displaymodul 1418 zugewandten Seite der sechsten Schicht 1412 angeordnet ist. Schließlich kann auf der sechsten Schicht 1412 in Analogie zur ersten Schicht 1402 eine siebte Schicht 1414 angeordnet sein, welche eine weitere Oberfläche der Chipkarte 1400 ausgebildet, beispielsweise die Oberseite der Chipkarte 1400.

Es wird drauf hingewiesen, dass die Bezeichnungen Oberseite der Chipkarte 1400 und Unterseite der Chipkarte 1400 willkürlich gewählt sind. Im Folgenden wird mit der Oberseite der Chipkarte 1400 auf die Seite Bezug genommen, zu welcher Licht von der auf dem Displaymodul 1418 angeordneten Leuchtvorrichtung hin abgestrahlt wird. In Fig.14A ist dabei der Beobachter 1420, welcher auf die Oberseite der Chipkarte 1400 blickt, durch das Augensymbol symbolisiert. Es sei an dieser Stelle betont, dass der in Fig.14A beschriebene Schichtenaufbau beispielhaft ist, so dass bei Bedarf weitere funktionale Schichten hinzugefügt werden können oder die in Fig.14A dargestellte Anzahl von Schichten reduziert werden kann. Die benutzbare Chipkarte 1400 wird gebildet, indem die einzelnen Schichten aufeinander laminiert werden.

Die fünfte Schicht 1410, welche den Diffusor aufweist, hat zur Aufgabe eine diffuse Streuung des von der Leuchtvorrichtung des Displaymoduls 1418 abgestrahlten Lichts herbeizuführen. Mit anderen Worten dient die im Inneren der Chipkarte 1400 über dem Displaymodul 1418 liegende Diffusorfolie zur Aufweitung des punktförmig von Leuchtelementen der Leuchtvorrichtung im Displaymodul 1418 abgestrahlten Lichts. Die über der Diffusorfolie auf der zur Innenseite der Chipkarte 1400 zugewendeten Seite der sechsten Schicht 1412 angeordnete Maske definiert lichtdurchlässige Bereiche, durch welche das aufgeweitete Licht zur Oberseite der Chipkarte 1400 und damit zum Betrachter 1420 hindurchtreten kann. Mittels der Maskierungsschicht, d.h. mittels der auf der sechsten Schicht 1412 angeordneten Maske 1413, können beispielsweise die Segmente einer 7-Segment-Anzeige ausgebildet werden. Die Maske 1413 kann dabei auf der zum Inneren der Chipkarte 1400 zugewendeten Seite der sechsten Schicht 1412 mit schwarzer Farbe oder einem anderen lichtundurchlässigen Material aufgedruckt sein.

Durch die gemeinsame Verwendung des Diffusors zusammen mit der Maske 1413 kann das sehr helle, aber praktisch punktförmige Licht der Leuchtmittel der Leuchtvorrichtung zunächst in eine größere leuchtende Flächen umgewandelt werden. Anschließend propagiert das aufgeweitete Licht zur Maske 1413, welche das diffuse Licht nur an bestimmten Stellen zur Oberseite der Chipkarte 1400 durchlässt. Eine direkte Anordnung der Leuchtmittel zu einer Segmentanzeige kann zur Folge haben, dass das angezeigte Leuchtsignal für den Beobachter 1420 kaum wahrnehmbar ist, da das punktförmige Licht der Leuchtmittel der Leuchtvorrichtung nicht als gemeinsames Zeichen wahrgenommen wird. Die verwendeten Leuchtmittel in Form von LEDs oder OLEDs haben üblicherweise eine sehr kleine Baugröße, da beispielsweise eine Chipkarte im ID-1 Format maximal 800µm dick sein darf. Berücksichtigt man die weiteren Schichten, so kann es erforderlich sein, dass die das Displaymodul 1418 aufweisende vierte Schicht eine Dicke von etwa 200µm nicht überschreiten sollte, so dass eher kleine Leuchtmittel zur Anwendung kommen. Durch den Diffusor werden die punktförmigen Leuchtmittel in flächige Lichtquellen umgewandelt, deren Licht dann durch die Maske beispielsweise in die übliche Balkenform einer Segmentanzeige gebracht werden kann. Anders ausgedrückt ist in der Ebene des Diffusors jeder nahezu punktförmige Lichtfleck eines dazugehörigen in der Leuchtvorrichtung 1014 angeordneten Leuchtmittels durch diffuse Streuung zu einer größeren leuchtenden Fläche transformiert. So kann die Anzeige auch vom Benutzer 1420 als Segmentanzeige wahrgenommen werden. Der Grad der diffusen Streuung, d.h. der Grad der Aufweitung des punktförmigen Lichts, kann durch Konzentration und die Art des verwendeten Diffusors gesteuert werden. Je häufiger und je stärker das von den Leuchtmitteln der Leuchtvorrichtung 1014 abgestrahlte Licht auf dem Weg zum Maske 1413 gestreut wird, umso stärker der Grad der Aufweitung des punktförmigen Lichts.

In einer Abwandlung des in Fig.14A dargestellten Ausführungsbeispiels der Chipkarte 1400 gemäß verschiedenen Ausführungsbeispielen kann der Diffusor auch in das Vergussmaterial (Verkapselungsmaterial) des Displaymoduls 1418 eingebracht werden. Mit anderen Worten kann ein diffus Licht streuendes Material, beispielsweise in Form von diffus Licht streuenden Partikeln, in dem Vergussmaterial des Displaymoduls 1300 vorliegen. Bei einem solchen Ausführungsbeispiel kann dann die fünfte Schicht 1410 im Aufbau der Chipkarte 1400 weggelassen werden.

In **Fig.14B** ist ein schematischer Aufbau einer Chipkarte 1400 gemäß weiteren Ausführungsbeispielen im Querschnitt dargestellt. Der dargestellte Aufbau ist dem in Fig14A dargestellten Aufbau sehr ähnlich, so dass gleiche Bezugszeichen gleiche Elemente bezeichnen und nicht erneut beschrieben werden. Der Unterschied zu der in Fig.14A dargestellten Ausführungsform der Chipkarte 1400 besteht darin, dass die Maske 1413 in Fig.14B nicht auf der sechsten Schicht 1412 angeordnet ist, sondern direkt auf dem Displaymodul 1418 angebracht ist. In einem Herstellungsverfahren kann die Maske 1413 beispielsweise auf die Oberseite des Displaymoduls 1418 aufgedruckt werden. Ein weiterer Unterschied besteht darin, dass der Diffusor nicht in Form einer Diffusorfolie (fünfte Schicht 1410 in Fig.14A) bereitgestellt ist, sondern ein diffus Licht streuendes Material oder ein transparentes Material mit streuenden Partikeln, beispielsweise Glasperlen, direkt in dem Vergussmaterial des Displaymoduls 1418 bereitgestellt ist.

Im Zusammenhang mit den Ausführungsbeispielen der Chipkarte 1400, welche in Fig.14A und Fig.14.B gezeigt sind, ist zu erwähnen, dass aufgrund der Helligkeit der Leuchtmittel der Leuchtvorrichtung (beispielsweise LEDs oder OLEDs) auf ein aufwendiges transparentes Fenster im Aufbau der Chipkarte 1400 verzichtet werden kann. Die zwischen dem Displaymodul 1418 und der Oberseite der Chipkarte 1400 angeordneten Schichten oder Folien (samt der die fühlbare Oberfläche der Chipkarte 1400 ausbildenden Schicht, in diesem Fall der siebten Schicht 1417) können daher sowohl transparent als auch transluzent oder entsprechend opak sein. Somit ist die Leuchtvorrichtung im Inneren der Chipkarte 1400 sichtbar, ohne dass eine aufwendige Fenstertechnologie verwendet werden muss.

In Zusammenhang mit den Ausführungsbeispielen der Chipkarte in Fig. 14A und 14B ist zu erwähnen, dass hier der schematische Aufbau einer Chipkarte dargestellt ist. Wie in einer Kartenproduktion üblich, können zur Herstellung einer Chipkarte alle Folien in einer Heiz-/Kühlpresse mit Temperatur und Druck beaufschlagt werden. Bei dieser Lamination verschmelzen die einzelnen Folien zu einem Verbund. Insbesondere für ein Sicherheitsdokument verfolgt man das Ziel einen untrennbaren monolithischen Block zu erhalten. Beispielhafte Materialien sind PET (Polyethylenterephthalat), PC (Polycarbonat), PVS (Polyvinylsiloxan), PET (Polyethylenterephthalat), PMMA (Polymethylmethacrylat), ABS (Acrylnitril-Butadien-Styrol) oder PVC (Polyvinylchlorid).

In **Fig.15** ist eine Draufsicht 1500 auf eine Maskenschicht 1413 dargestellt. Die Abdeckschicht 1413 ist dabei so ausgebildet, dass eine 7-Segment-Anzeige gebildet wird, mittels welcher in diesem Ausführungsbeispiel zwei Ziffern dargestellt werden können. Die hellen Bereiche entsprechen dabei freien Bereichen in der Maskenschicht 1413, d.h. Bereichen, welche Licht von dem Displaymodul 1418 zur Oberseite der Chipkarte 1400 zum Betrachter 1420 hin durchlassen. Hinter jedem Balken eines Zeichens in der 7-Segment-Anzeige kann mittig ein Leuchtmittel angeordnet sein, dessen Licht vom Diffusor gleichmäßig auf eine Fläche aufgeweitet werden kann, welche mindestens der Fläche des Balkens entspricht, so dass dieser bei Bedarf gleichmäßig ausgeleuchtet werden kann. Je nach Größe und Helligkeit der verwendeten Leuchtmittel kann auch mehr als ein Leuchtmittel pro Balken verwendet werden, d.h. hinter diesem angeordnet sein. Ferner können auch Leuchtmittel in beliebiger Kombination verwendet werden, welche Licht unterschiedlicher Farben abstrahlen.

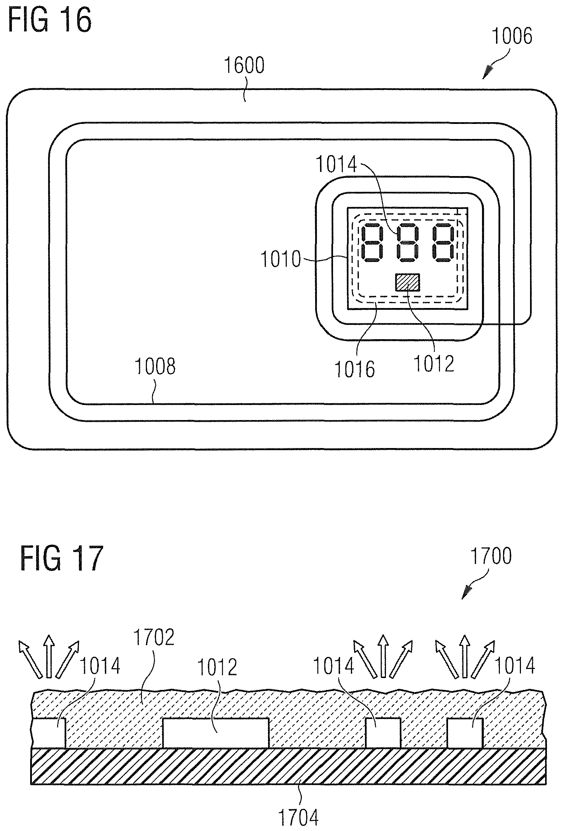

In **Fig.16** ist eine Draufsicht auf eine Chipkarte 1006 gemäß verschiedenen Ausführungsbeispielen dargestellt. Die Chipkarte 1600 weist Komponenten auf, welche bereits im Zusammenhang mit den Figuren 10 bis 12 erläutert worden sind, so dass gleiche Komponenten gleiche Bezugszeichen tragen. Die Chipkarte 1006, bei der es sich um ein beliebiges Wert- und/oder Sicherheitsdokument handeln kann, weist einen Chipkartenkörper 1600 auf. In dem Chipkartenkörper 1600 ist die Booster-Antenne 1008 angeordnet. Die Booster-Antenne 1008 weist einen Kopplungsbereich auf, in welchem das Displaymodul 1010 (Chipkartenmodul) angeordnet ist. Der Kopplungsbereich wird von den Leiterbahnenwindungen der Booster-Antenne 1008 gebildet, welche in diesem Ausführungseispiel von allen vier Seiten des Displaymoduls 1010 umgeben. Auf dem Displaymodul 1010 ist eine Displaymodul-Antenne 1016 bereitgestellt, welche induktiv und damit verschleißfrei an die Booster-Antenne 1008 koppeln kann. Damit existieren keine ohmschen, verschleißanfälligen Kontakte zwischen dem Displaymodul 1010 und der Booster-Antenne 1008, welche sonst in einem aufwendigen Kontaktierungsprozess bei der Herstellung eines üblichen Chipkartenmoduls ausgebildet werden müssten. Auf dem Displaymodul 1010 ist der Chip 1012 angeordnet, welcher unter anderem zur Ansteuerung der Leuchtvorrichtung 1014 eingerichtet ist. In diesem Ausführungsbeispiel weist die Leuchtvorrichtung 1014 Leuchtmittel auf, beispielsweise LEDs oder OLEDs auf, welche derart angeordnet sind, dass von ihnen eine 7-Segment-Anzeige mit drei Ziffern gebildet wird.

In **Fig.17** ist ein Displaymodul 1010 gemäß verschiedenen Ausführungsbeispielen in einer Querschnittsansicht dargestellt. Das Displaymodul 1010 weist eine Trägerschicht 1704 auf, auf welcher der Chip 1012 sowie die Leuchtvorrichtung 1014 bereitgestellt ist. Die Leuchtvorrichtung 1014 weist in diesem Ausführungsbeispiel diskrete Leuchtmittel auf, beispielsweise LEDs oder OLEDs. Über der Trägerschicht 1704 ist ein Verkapselungsmaterial 1702 abgeschieden, welches die freien Bereiche zwischen dem Chip 1012 und der Leuchtvorrichtung 1014 ausfüllt und eine ebene Oberfläche über der Trägerschicht 1704 ausbildet. In diesem Ausführungsbeispiel des Displaymoduls 1010 weist das Verkapselungsmaterial 1702 mindestens ein Sicherheitsmaterial auf. Ein Sicherheitsmaterial kann die Eigenschaften des von der Leuchtvorrichtung 1014 abgegebenen Lichtes ändern, beispielsweise dessen Spektrum, Ansprechzeit und/oder Abklingverhalten. Dazu können in dem Verkapselungsmaterial 1702 beispielsweise folgende Sicherheitsmaterialien bereitgestellt sein: fluoreszierende oder phosphoreszierende Stoffe, Farbstoffe zur Filterung des abgegebenen Lichts, Konversionsleuchtstoffe (z.B. upconversion (Lichtfrequenz-Aufwärtskonversion)oder downconversion (Lichtfrequenz-Aufwärtskonversion)) zur Verschiebung des Emissionsspektrums des ausgesendeten Lichtes, Effektpigmente. Durch das Sicherheitsmaterial können dem von der Leuchtvorrichtung 1014 abgestrahlten Licht weitere Informationsmerkmale aufgeprägt werden, welche als "2d-Level-Feature" (Merkmale zweiter Stufe) oder "3rd-Level-Feature" (Merkmale dritter Stufe) von Verifikationsgeräten, beispielsweise entsprechend eingerichteten Lesevorrichtungen, gemessen/ausgewertet werden können, um die Echtheit der dazugehörigen Chipkarte 1006 gemäß verschiedenen Das Sicherheitsmaterial kann auch dazu genutzt werden, bei Verwendung handelsüblicher LED-Bauteile und/oder OLED-Bauteile als Leuchtmittel der Leuchtvorrichtung 1014 ein Sicherheitsmerkmal einzubauen, um den Austausch gegen andere Leuchtmittel, welche über einen anderen, etwa korrumpierten, Chip (anstatt des authentischen Chips 1012) angesteuert werden, zu verhindern.

Im Hinblick auf die in den Figuren 14A und 14B dargestellten Ausführungsbeispiele der Chipkarte 1400 gemäß verschiedenen Ausführungsbeispielen ist hinzuzufügen, dass das Sicherheitsmaterial anstatt in dem Verkapselungsmaterial des Chipkartenmoduls 1418 auch in der fünften Schicht 1410 enthalten sein kann, welche den Diffusor aufweist. Ferner kann auch eine räumliche Variation des Sicherheitsmaterials ausgenutzt werden, um eine räumlich variable Aufprägung von Sicherheitsmerkmalen herbeizuführen, so dass etwa ein bestimmter Anteil des aus der Chipkarte 1006 ausgehenden Lichts eine abwärtskonvertierte Wellenlänge aufweist und ein weiterer Bestimmter Anteil des aus der Chipkarte 1006 ausgehenden Lichts eine aufwärtskonvertierte Wellenlänge aufweist und die Abfrage des Sicherheitsmerkmals von einer entsprechend eingerichteten Leseeinrichtung nur dann erfolgreich ist, wenn die so erzeugte Farbmischung eine bestimmte Farbe aufweist.

Mit dem Displaymodul gemäß verschiedenen Ausführungsbeispielen lassen sich vielfältige Anwendungen realisieren, von denen nachfolgend einige beispielhaft angegeben werden sollen. So kann das Displaymodul als eine Statusanzeige fungieren, zum Beispiel als eine Feldanzeige, welche einem Benutzer signalisieren kann, wenn ein Lesevorgang erfolgt und/oder wenn ein Lesevorgang abgeschlossen ist. Diese Option kann etwa bei Reisedokumenten als Nutzerhilfe für Selbstbedienungsterminals, als dynamische PIN-Anzeige, zur Darstellung eines Einmalpasswortes oder eines Guthabens verwendet werden. Das Displaymodul kann aber auch zur optischen Übertragung von Daten an ein Verifikationsgerät, beispielsweise an ein mobiles Endgerät (z.B. Smartphone) verwendet werden. Die Daten können mittels nicht-kognitiv erfassbarer Informationen, etwa als Segment-Barcode oder in Form von Lichtpulsen, übertragen werden. Die auf diese Weise übermittelten Daten (z.B. Visuminformationen, Passwörter) können im Endgerät (z.B. mit entsprechender App) entschlüsselt und dargestellt werden. Das Displaymodul gemäß verschiedenen Ausführungsbeispielen kann allgemein bei Identifikationsdokumenten (ID-Dokumente) aller Art zur Anwendung kommen, beispielsweise in einem Reisepass oder einer ID-Karte, einem Personalausweis, einem Führerschein, oder einer Bankkarte, einer Kreditkarte, einem Zutrittskontrollausweis, einer Krankenkassenkarte oder einer beliebigen Chipkarte.

Das Displaymodul gemäß verschiedenen Ausführungsbeispielen zeichnet sich durch einen kosteneffizienten Aufbau in einem entsprechenden Dokument aus, welches beispielsweise auf einer Chipkarte basiert. Des Weiteren können zu seiner Realisierung handelsübliche Bauelemente in minimaler Anzahl verwendet werden. Wie in einigen Ausführungsformen dargestellt, ist kein gesonderter Treiberschaltkreis zur Ansteuerung der Leuchtvorrichtung erforderlich, denn die Leuchtvorrichtung kann direkt vom Chip des Displaymoduls (Chipkartenmoduls) angesteuert werden. Durch die Implementierung des Displaymoduls gemäß verschiedenen Ausführungsbeispielen in einem Wert- oder Sicherheitsdokument kann zudem durch die Bereitstellung dieser für den Benutzer intuitiven Schnittstelle die Benutzerfreundlichkeit erhöht werden.

In der Beschreibung wurden die Begriffe Chipkartenmodul und Displaymodul verwendet, wobei sie als synonym anzusehen sind. Unter dem Begriff Displaymodul ist ein Chipkartenmodul zu verstehen, auf welchem eine Leuchtvorrichtung angeordnet ist, so dass eine Lichtabstrahlung nach Außen (aus der Chipkarte heraus) erfolgen kann, welches beispielsweise von einem Benutzer wahrgenommen werden kann. Das Displaymodul kann dabei in einer gewöhnlichen Chipkarte beliebigen Formats eingebettet sein oder in einem beliebigen Wert- oder Sicherheitsdokument integriert sein.

## Patentansprüche

1. Chipkartenmodul für eine Chipkarte, welches aufweist:
• einen Chipkartenmodulträger;
• eine Verdrahtungsstruktur, welche auf dem Chipkartenmodulträger angeordnet ist;
• einen integrierten Schaltkreis, welcher auf dem Chipkartenmodulträger angeordnet ist und mit der Verdrahtungsstruktur elektrisch gekoppelt ist;
• eine Chipkartenmodul-Antenne, welche auf dem Chipkartenmodulträger angeordnet ist und mit der Verdrahtungsstruktur elektrisch gekoppelt ist;
• eine Leuchtvorrichtung, welche auf dem Chipkartenmodulträger angeordnet ist und mit der Verdrahtungsstruktur elektrisch gekoppelt ist;
**gekennzeichnet durch** ein Verkapselungsmaterial auf oder über dem Chipkartenmodul, wobei das Verkapselungsmaterial ein Sicherheitsmaterial aufweist, das die Eigenschaften des von der Leuchtvorrichtung abgegebenen Lichtes, insbesondere dessen Spektrum, Ansprechzeit und/oder Abklingverhalten, in einer Weise ändert, dass die Echtheit der Chipkarte und/oder der Leuchtvorrichtung verifizierbar sind/ist.

2. Chipkartenmodul gemäß Anspruch 1,
wobei der integrierte Schaltkreis eingerichtet ist, die Leuchtvorrichtung anzusteuern.

3. Chipkartenmodul gemäß Anspruch 1 oder 2,
wobei die Leuchtvorrichtung mehrere diskrete Leuchtmittel aufweist.

4. Chipkartenmodul gemäß einem der Ansprüche 1 bis 3,
wobei die Verdrahtungsstruktur und die Leuchtvorrichtung in dem Chipkartenmodul integriert sind.

5. Chipkartenmodul gemäß einem der Ansprüche 1 bis 4,
wobei der Chipkartenmodulträger einen verstärkten Bereich aufweist, in welchem der integrierte Schaltkreis angeordnet ist;
wobei vorzugsweise der verstärkte Bereich eine Materialschicht aufweist, welche einen höheren Steifigkeitswert aufweist als der Chipkartenmodulträger.

6. Chipkartenmodul gemäß einem der Ansprüche 1 bis 5,
wobei über einer Oberfläche des Chipkartenmodulträgers, auf welcher die Leuchtvorrichtung angeordnet ist, eine transparente Abdeckschicht angeordnet ist.

7. Chipkartenmodul gemäß einem der Ansprüche 1 bis 6, ferner aufweisend:
einen Ring, welcher entlang des Randbereiches des Chipkartenmodulträgers verlaufend auf diesem angeordnet ist.

8. Verfahren zum Herstellen eines Chipkartenmoduls für eine Chipkarte, aufweisend:
• Bereitstellen eines Chipkartenmodulträgers;
• Ausbilden einer Verdrahtungsstruktur auf dem Chipkartenmodulträger;
• Ausbilden eines integrierten Schaltkreises auf dem Chipkartenmodulträger, so dass der integrierte Schaltkreis mit der Verdrahtungsstruktur elektrisch gekoppelt ist;
• Ausbilden einer Chipkartenmodul-Antenne auf dem Chipkartenmodulträger, so dass die Chipkartenmodul-Antenne mit der Verdrahtungsstruktur elektrisch gekoppelt ist;
• Ausbilden einer Leuchtvorrichtung auf dem Chipkartenmodulträger, so dass die Leuchtvorrichtung mit der Verdrahtungsstruktur elektrisch gekoppelt ist; und
**gekennzeichnet durch** das Ausbilden eines Verkapselungsmaterial auf oder über dem Chipkartenmodul, wobei das Verkapselungsmaterial ein Sicherheitsmaterial aufweist, das die Eigenschaften des von der Leuchtvorrichtung abgegebenen Lichtes, insbesondere dessen Spektrum, Ansprechzeit und/oder Abklingverhalten, in einer Weise ändert, dass die Echtheit der Chipkarte und/oder der Leuchtvorrichtung verifizierbar sind/ist.

9. Verfahren gemäß Anspruch 8,
wobei das Ausbilden der Leuchtvorrichtung ein Ausbilden mehrerer diskreter Leuchtmittel aufweist.

10. Verfahren gemäß Anspruch 8 oder 9,
wobei die Verdrahtungsstruktur und die Leuchtvorrichtung in das Chipkartenmodul integriert werden.

11. Verfahren gemäß einem der Ansprüche 8 bis 10, ferner aufweisend:
Ausbilden eines verstärkten Bereiches auf dem Chipkartenmodulträger, in welchem der integrierte Schaltkreis angeordnet wird;
wobei vorzugsweise der verstärkte Bereich aus einer Materialschicht gebildet wird, welche einen höheren Steifigkeitswert aufweist als der Chipkartenmodulträger;
• wobei weiter vorzugsweise die Materialschicht auf dem Chipkartenmodulträger zwischen dem integrierten Schaltkreis und dem Chipkartenmodulträger ausgebildet wird; und/oder
• wobei weiter vorzugsweise die Materialschicht unter dem integrierten Schaltkreis auf der dem integrierten Schaltkreis gegenüberliegenden Seite des Chipkartenmodulträgers ausgebildet wird.

12. Verfahren gemäß einem der Ansprüche 8 bis 11, ferner aufweisend:
Ausbilden einer Spule auf dem Chipkartenmodulträger, welche mit der Verdrahtungsstruktur elektrisch gekoppelt ist.

13. Verfahren gemäß einem der Ansprüche 8 bis 12, ferner aufweisend:
Ausbilden eines Ringes auf dem Chipkartenmodulträger, welcher entlang des Randbereiches des Chipkartenmodulträgers auf dem Chipkartenmodulträger angeordnet ist;
wobei vorzugsweise das Verfahren ferner aufweist:
Auffüllen eines Bereiches über dem Chipkartenmodulträger, welcher seitlich von dem Ring begrenzt ist, mit einem Abdeckmaterial.

14. Chipkarte, aufweisend:
• das Chipkartenmodul gemäß einem der Ansprüche 1 bis 7;
• wobei das Chipkartenmodul von einem Chipkartenkörper umgeben ist;
wobei vorzugsweise das Chipkartenmodul in einer Vertiefung innerhalb einer Chipkartenschicht angeordnet ist;
wobei weiter vorzugsweise die Leuchtvorrichtung als eine Anzeige zum Darstellen alphanumerischer Zeichen eingerichtet ist.

15. Verfahren zum Herstellen einer Chipkarte, wobei das Herstellungsverfahren aufweist:
• Herstellen eines Chipkartenmoduls gemäß einem der Ansprüche 8 bis 13; und
• Anordnen des Chipkartenmoduls in einem Chipkartenkörper, so dass das Chipkartenmodul von dem Chipkartenkörper umgeben ist;
wobei vorzugsweise das Anordnen des Chipkartenmoduls in einem Chipkartenkörper aufweist:
• Ausbilden einer Vertiefung in einer Chipkartenschicht des Chipkartenkörpers; und
• Anordnen des Chipkartenmoduls in der Vertiefung.

## Claims

1. Chip card module for a chip card, which chip card module comprises:
• a chip card module carrier;
• a wiring structure, which is arranged on the chip card module carrier;
• an integrated circuit, which is arranged on the chip card module carrier and is electrically coupled to the wiring structure;
• a chip card module antenna, which is arranged on the chip card module carrier and is electrically coupled to the wiring structure;
• a lighting device, which is arranged on the chip card module carrier and is electrically coupled to the wiring structure;
**characterized by** an encapsulation material on or above the chip card module, wherein the encapsulation material comprises a security material which changes the properties of the light emitted by the lighting device, in particular the spectrum, response time and/or decay behavior of the said light, in such a way that the authenticity of the chip card and/or the lighting device is/are verifiable.

2. Chip card module according to Claim 1, wherein the integrated circuit is designed to drive the lighting device.

3. Chip card module according to Claim 1 or 2,
wherein the lighting device comprises a plurality of discrete illuminants.

4. Chip card module according to any of Claims 1 to 3, wherein the wiring structure and the lighting device are integrated in the chip card module.

5. Chip card module according to any of Claims 1 to 4, wherein the chip card module carrier comprises a reinforced region, in which the integrated circuit is arranged;
wherein preferably the reinforced region comprises a material layer having a higher stiffness value than the chip card module carrier.

6. Chip card module according to any of Claims 1 to 5, wherein a transparent covering layer is arranged above a surface of the chip card module carrier on which the lighting device is arranged.

7. Chip card module according to any of Claims 1 to 6, furthermore comprising:
a ring arranged in a manner running along the edge region of the chip card module carrier on the latter.

8. Method for producing a chip card module for a chip card, comprising:
• providing a chip card module carrier;
• forming a wiring structure on the chip card module carrier;
• forming an integrated circuit on the chip card module carrier, such that the integrated circuit is electrically coupled to the wiring structure;
• forming a chip card module antenna on the chip card module carrier, such that the chip card module antenna is electrically coupled to the wiring structure;
• forming a lighting device on the chip card module carrier, such that the lighting device is electrically coupled to the wiring structure; and **characterized by** forming an encapsulation material on or above the chip card module, wherein the encapsulation material comprises a security material which changes the properties of the light emitted by the lighting device, in particular the spectrum, response time and/or decay behavior of said light, in such a way that the authenticity of the chip card and/or the lighting device is/are verifiable.

9. Method according to Claim 8,
wherein forming the lighting device comprises forming a plurality of discrete illuminants.

10. Method according to Claim 8 or 9,
wherein the wiring structure and the lighting device are integrated in the chip card module.

11. Method according to any of Claims 8 to 10, furthermore comprising:
forming a reinforced region on the chip card module carrier, in which the integrated circuit is arranged;
wherein preferably the reinforced region is formed from a material layer having a higher stiffness value than the chip card module carrier;
• wherein furthermore preferably the material layer is formed on the chip card module carrier between the integrated circuit and the chip card module carrier; and/or
• wherein furthermore preferably the material layer is formed below the integrated circuit on the opposite side of the chip card module carrier relative to the integrated circuit.

12. Method according to any of Claims 8 to 11, furthermore comprising:
forming a coil on the chip card module carrier, said coil being electrically coupled to the wiring structure.

13. Method according to any of Claims 8 to 12, furthermore comprising:
forming a ring on the chip card module carrier, which is arranged along the edge region of the chip card module carrier on the chip card module carrier;
wherein preferably the method furthermore comprises:
filling a region above the chip card module carrier, which is laterally delimited by the ring, with a covering material.

14. Chip card, comprising:
• the chip card module according to any of Claims 1 to 7;
• wherein the chip card module is surrounded by a chip card body;
wherein preferably the chip card module is arranged in a depression within a chip card layer;
wherein furthermore preferably the lighting device is designed as a display for representing alphanumeric characters.

15. Method for producing a chip card, wherein the production method comprises:
• producing a chip card module according to any of Claims 8 to 13; and
• arranging the chip card module in a chip card body, such that the chip card module is surrounded by the chip card body;
wherein preferably arranging the chip card module in a chip card body comprises:
• forming a depression in a chip card layer of the chip card body; and
• arranging the chip card module in the depression.

## Revendications

1. Module de carte à puce pour une carte à puce, lequel possède :
• un porte-module de carte à puce ;
• une structure de câblage, laquelle est disposée sur le porte-module de carte à puce ;
• un circuit intégré, lequel est disposé sur le porte-module de carte à puce et est connecté électriquement à la structure de câblage ;
• une antenne de module de carte à puce, laquelle est disposée sur le porte-module de carte à puce et est connectée électriquement à la structure de câblage ;
• un dispositif lumineux, lequel est disposé sur le porte-module de carte à puce et est connecté électriquement à la structure de câblage ;
**caractérisé par** un matériau d'encapsulation sur ou au-dessus du module de carte à puce, le matériau d'encapsulation possédant un matériau de sécurité qui modifie les propriétés de la lumière délivrée par le dispositif lumineux, notamment de son spectre, son temps de réaction et/ou son comportement d'évanouissement de telle manière que l'authenticité de la carte à puce et/ou celle du dispositif lumineux est/sont vérifiables.

2. Module de carte à puce selon la revendication 1, le circuit intégré étant conçu pour piloter le dispositif lumineux.

3. Module de carte à puce selon la revendication 1 ou 2, le dispositif lumineux possédant plusieurs moyens lumineux discrets.

4. Module de carte à puce selon l'une des revendications 1 à 3, la structure de câblage et le dispositif lumineux étant intégrés dans le module de carte à puce.

5. Module de carte à puce selon l'une des revendications 1 à 4, le porte-module de carte à puce possédant une zone renforcée dans laquelle est disposé le circuit intégré ;
la zone renforcée possédant de préférence une couche de matériau qui possède une valeur de rigidité supérieure à celle du porte-module de carte à puce.

6. Module de carte à puce selon l'une des revendications 1 à 5, une couche de recouvrement transparente étant disposée sur une surface du porte-module de carte à puce sur laquelle est disposé le dispositif lumineux.

7. Module de carte à puce selon l'une des revendications 1 à 6, possédant en outre une couronne qui est disposée sur le porte-module de carte à puce en suivant un tracé le long de la zone de bordure de celui-ci.

8. Procédé de fabrication d'un module de carte à puce pour une carte à puce, comprenant :
• la fourniture d'un porte-module de carte à puce ;
• la formation d'une structure de câblage sur le porte-module de carte à puce ;
• la formation d'un circuit intégré sur le porte-module de carte à puce, de sorte que le circuit intégré est connecté électriquement à la structure de câblage ;
• la formation d'une antenne de module de carte à puce sur le porte-module de carte à puce, de sorte que l'antenne de module de carte à puce est connectée électriquement à la structure de câblage ;
• la formation d'un dispositif lumineux sur le porte-module de carte à puce, de sorte que le dispositif lumineux est connecté électriquement à la structure de câblage ;
**caractérisé par** la formation d'un matériau d'encapsulation sur ou au-dessus du module de carte à puce, le matériau d'encapsulation possédant un matériau de sécurité qui modifie les propriétés de la lumière délivrée par le dispositif lumineux, notamment de son spectre, son temps de réaction et/ou son comportement d'évanouissement de telle manière que l'authenticité de la carte à puce et/ou celle du dispositif lumineux est/sont vérifiables.

9. Procédé selon la revendication 8, la formation du dispositif lumineux comprenant une formation de plusieurs moyens lumineux discrets.

10. Procédé selon la revendication 8 ou 9, la structure de câblage et le dispositif lumineux étant intégrés dans le module de carte à puce.

11. Procédé selon l'une des revendications 8 à 10, comprenant en outre :
la formation d'une zone renforcée sur le porte-module de carte à puce, dans laquelle est disposé le circuit intégré ;
la zone renforcée étant de préférence formée à partir d'une couche de matériau qui possède une valeur de rigidité supérieure à celle du porte-module de carte à puce ;
• la couche de matériau étant en plus de préférence formée sur le porte-module de carte à puce entre le circuit intégré et le porte-module de carte à puce ; et/ou
• la couche de matériau étant en plus de préférence formée sous le circuit intégré sur le côté du porte-module de carte à puce qui se trouve à l'opposé du circuit intégré.

12. Procédé selon l'une des revendications 8 à 11, comprenant en outre :
la formation d'une bobine sur le porte-module de carte à puce, laquelle est connectée électriquement à la structure de câblage.

13. Procédé selon l'une des revendications 8 à 12, comprenant en outre :
la formation d'une couronne sur le porte-module de carte à puce, laquelle est disposée sur le porte-module de carte à puce le long de la zone de bordure du porte-module de carte à puce ;
le procédé comprenant de préférence en plus :
le remplissage d'une zone au-dessus du porte-module de carte à puce, laquelle est délimitée latéralement par la couronne, avec un matériau de recouvrement.

14. Carte à puce, possédant :
• le module de carte à puce selon l'une des revendications 1 à 7 ;
• le module de carte à puce étant entouré par un corps de carte à puce ;
le module de carte à puce étant de préférence disposé dans une empreinte à l'intérieur d'une couche de carte à puce ;
le dispositif lumineux étant en plus de préférence conçu sous la forme d'un afficheur destiné à représenter des caractères alphanumériques.

15. Procédé de fabrication d'une carte à puce, le procédé de fabrication comprenant :
• la fabrication d'un module de carte à puce selon l'une des revendications 8 à 13 ; et
• la disposition du module de carte à puce dans un corps de carte à puce, de sorte que le module de carte à puce soit entouré par le corps de carte à puce ;
la disposition du module de carte à puce dans un corps de carte à puce comprenant de préférence :
• la formation d'une empreinte dans une couche de carte à puce du corps de carte à puce ; et
• la disposition du module de carte à puce dans l'empreinte.
